(19) Europäisches Patentamt
European Patent Office
Office européen des brevets

(11) **EP 1 760 954 B1**

(12) **EUROPEAN PATENT SPECIFICATION**

(45) Date of publication and mention
of the grant of the patent:
**28.05.2008 Bulletin 2008/22**

(51) Int Cl.:
*H04L 12/56* (2006.01)    *H04Q 7/36* (2006.01)

(21) Application number: **05018847.3**

(22) Date of filing: **30.08.2005**

(54) **Scheduler for controlling a transmitter/receiver, base station for a mobile communications network, methods and computer programs for operating the same**

Ablaufsteuerung zur Steuerung eines Senders/Empfängers, Basisstation für ein mobiles Kommunikationsnetz, Verfahren und Computerprogramme zu ihrem Betrieb

Programmateur pour contrôler un transmetteur/récepteur, station de base pour un réseau de communication mobile, procédés et programmes informatiques correspondants

(84) Designated Contracting States:
**DE GB**

(43) Date of publication of application:
**07.03.2007 Bulletin 2007/10**

(73) Proprietor: **NTT DoCoMo, Inc.**
**Tokyo (JP)**

(72) Inventors:
• **Persson, Anders**
  **416 80 Göteborg (SE)**
• **Ottosson, Tony**
  **413 24 Göteborg (SE)**
• **Auer, Gunther**
  **80339 München (DE)**

(74) Representative: **Zinkler, Franz et al**
**Schoppe, Zimmermann, Stöckeler & Zinkler**
**Postfach 246**
**82043 Pullach bei München (DE)**

(56) References cited:
EP-A- 1 282 324    US-A1- 2003 017 831
US-A1- 2004 072 571    US-B1- 6 333 936
US-B1- 6 751 193

**Description**

The present invention is generally related to a scheduler for controlling a base station, a base station for a mobile communications network and methods and computer programs for operating same. In particular, the present invention is related to inter-sector scheduling in a multi-user OFDM system.

Adaptive modulation combined with opportunistic packet scheduling on the physical layer is a very promising concept for future wireless systems. Using channel prediction, mobile terminals report back the downlink channel SNIR (or a related measure) and a scheduler at the base station determines which user that should gain access to the channel.

As the next generation mobile communication system will most likely be packet switched, traffic will be bursty. Therefore, relatively long periods of silence (empty buffer) for one user may occur, while at other times the data rate required by that user will be considerably larger than the average rate. As a result, the number of competing users as well as the required data rates per user vary with time.

In the present disclosure, the following documents will be referenced by numerals in squared brackets, as defined below:

[1] A. Ghasemi and E. S. Sousa, "Distributed Intercell Coordination through Time Reuse Partitioning in Downlink CDMA," in Proc. Wireless Commun. & Networking Conf. (WCNC'04), Atlanta, USA, pp. 1992-1997, Mar. 2004.

[2] M. Sternad and D. Aronsson, "Channel Estimation and Prediction for Adaptive OFDM Downlinks," in Proc. IEEE Vehic. Technol. Conf. 2003-Fall (VTC'F03), Orlando, USA, pp. 1283-1287, Oct. 2003.

[3] M. Sternad, T. Ottosson, A. Ahlen, and A. Svensson, "Attaining both Coverage and High Spectral Efficiency with Adaptive OFDM Downlinks," in Proc. IEEE Vehic. Technol. Conf. 2003-Fall (VTC'F03), Orlando, USA, pp. 2486-2490, Oct. 2003.

[4] J. Chuang, "An OFDM-based System with Dynamic Packet Assignment and Interference Suppression for Advanced Cellular Internet Services," in Proc. IEEE Global Telecommun. Conf. (Globecom'98), Sydney, Australia, pp. 974-979, Nov. 1998.

[5] M. H. Ahmed, H. Yanikomeroglu, S. Mahmoud, and D. Falconer, "Scheduling of Multimedia Traffic in Interference-limited Broadband Wireless Access Networks," in Proc. Int. Symp. Wireless Pers. Multimedia Commun. (WPMC'02), Hawaii, USA, pp. 1108-1112, Oct. 2002.

[6] J. Gross, J. Klaue, H. Karl, and A. Wolisz, "Subcarrier Allocation for Variable Bit Rate Video Streams in Wireless OFDM Systems," in Proc. IEEE Vehic. Technol. Conf. 2003-Fall (VTC'F03), Orlando, USA, pp. 2481{-2485, Oct. 2003.

[7] D. Haccoun and G. Begin, "High-rate punctured convolutional codes for Viterbi and sequential decoding,"IEEE Trans. Commun., vol. 37, pp. 1113{1125, Nov. 1989.

[8] W. Wang, T. Ottosson, M. Sternad, A. Ahlen, and A. Svensson, "Impact of multiuser diversity and channel variability on adaptive OFDM," in Proc. IEEE Vehic. Technol. Conf. 2003-Fall (VTC'F03), Orlando, USA, pp. 547-551, Oct. 2003.

[9] A. Leon-Garcia and I. Widjaja, Communication Networks. New York, NY, USA: McGraw-Hill, 2000.

[10] A. S. Tannenbaum, Computer Networks. Englewood Cliffs, NJ: Prentice Hall, 4th ed., 1996.

[11] J. H. Rhee, J. M. Holtzman, and D. K. Kim, "Scheduling of Real/Non-real Time Services: Adaptive EXP/PF Algorithm," in Proc. IEEE Vehic. Technol. Conf. 2003-Spring (VTC'S03), Jeju, Korea, pp. 462,-466, Apr. 2003.

At the heart of the downlink scheme of an adaptive multi-user OFDM system lies the fast adaptive modulation. To determine the modulation for each slot, predictions of the SINR are needed [2], [3]. While the fast fading component for the signal of interest is a smooth correlated process that can be predicted for low mobility users, the interference power from other base stations is not. The total interference power seen in a slot depends on the transmission activity for each interfering base station and, with burst data traffic, predicting its short-term value at the mobile terminals is virtually impossible.

Clearly, an inter-cell interference avoidance scheme is a key feature for successful implementation of fast adaptive modulation in a cellular packet-based system. The traditional approach with static frequency planning used in, e.g., the GSM system, is one alternative. However, in a packet based system relatively long periods of silence (no data to transmit) may occur at a given base station. Since different base stations serve different number of users, and since average data rates vary between users, base station loads will be different also on longer time scales. Again, static resource allocation is not a good choice.

Several proposals for dynamic slot allocation between base stations have been made in the literature [1, 4, 5]. In this section, we briefly review two proposals.

Paper [1] includes an investigation of the downlink of a CDMA system with sectorized cells. Groups of interfering sectors are formed and an inter-cell scheduler assigns time slots to these sectors one at a time. In other words, inter-cell-interference is avoided by orthogonality in the time-domain. The authors of [1] propose a scheduler that coordinates transmissions to users located close to the cell borders. Users located close to the base stations can use all time slots but with reduced transmit power. This idea is analogous to the "inner ring" proposal of [3].

According to [1], time slots should be shared between sectors in accordance to the sector loads. A precise definition of the sector load is, however, missing. For the traffic model, the authors of [1] assume that all users always have data to transmit. With this assumption, it can be concluded from [1] that the system load becomes equivalent to the number of active users in the system. Since resources are locked to a given user also when there is no data to transmit, the scheme described in [1] cannot benefit from statistical multiplexing - one of the key features to improved capacity in packet networks.

In other words, the inter-cell scheduler describe in [1] is based on the number of active users in the system (long term average load). Hence, statistical multiplexing gains can not be expected in this system.

Paper [6] proposes that downlink resources (sub-carriers) should be assigned to the active users connected to a single base station in proportion to their relative packet-queue lengths. In other words, [6] describes sub-carrier allocation for variable bit rate video streams in wireless OFDM systems. According to [6], a varying number of sub-carriers is assigned to wireless terminals for downlink communication. A relative length of a terminal's queue within an access point is used in order to determine how many sub-carriers are assigned for the downlink from a base station to a given wireless terminal. So, [6] discusses resource scheduling within a base station.

[2] further describes channel estimation and prediction for adaptive OFDM downlinks.

[3] describes a downlink radio interface for cellular packet data systems with wide area coverage and high spectral efficiency. A slotted OFDM radio interface is used in which time-frequency bins are allocated adaptively to different users within a downlink beam, based on their channel quality. Frequent division duplex (FDD) is assumed, which requires channel prediction in the terminals and the feedback of that information to a packet scheduler at the base station. To obtain both high-spectral efficiency and good coverage within sectors/beams, a scheme based on coordinated scheduling between sectors of the same size, and the employment of frequency reuse factor above 1 only in outer parts of the sector is proposed.

[4] describes an OFDM-based system with dynamic packet assignment and interference suppression for advanced cellular internet service. In [4], a dynamic packet assignment (DPA) method is proposed as a key component of the MAC protocol for an OFDM-based advanced cellular internet service (ACIS) system, which is targeted for applications such as web browsing, with a peak downlink transmission rate in the order of 1Mb/s using a wide-area cellular infrastructure. The proposed method is able to allocate radio resources on a packet time scale and reassign them in about 100 msec. Interference suppression is considered as a method for performance enhancement. Both frame structure and the data packet assignment (DPA) algorithm are discussed.

In [5], scheduling of multimedia traffic in interference-limited broadband wireless access networks is described. A transmission-scheduling algorithm for interference management in broadband wireless access networks is suggested. The algorithm aims at minimizing the co-channel interference using base station coordination while still maintaining the other quality of service (QoS) requirements such as packet delay, throughput, and packet loss. The interference result is achieved by avoiding (or minimizing) concurrent transmission of potential dominant interference. Dynamic slot allocation based on traffic information in other cells/sectors is employed. In order to implement the algorithm in a distributed manner, base stations exchange traffic information. Both real-time and non-real-time services are considered.

[7] describes high-rate punctured convolutional codes for Viterbi and sequential decoding.

In [8] the impact of multiuser diversity and channel variability on adaptive OFDM is discussed.

Further information on communications networks can be found in [9], and in [10] computer networks are described in detail. Furthermore, [11] gives information on scheduling of real/non-real time services using an adaptive EXP/PF algorithm.

US 6,751,193 B1 describes a method and an apparatus for controlling data transfer between two stations. The apparatus comprises a link manager for controlling allocation of available channels in a plurality of communication links. In each of the communication links, data is transferred between two stations in at least one channel. Data transfer from a data source is buffered in a data buffer. A controller determines a latency in the buffer from the amount of data in the buffer and a rate at which data is being output from the buffer. The controller generates a request for a change in the allocation of channels in a communications link between two stations depending on the latency in the buffer and preset threshold values. The link manager is responsive to a request generated by the controller to allocate a different number of channels to the communications link or to generate a refusal of the request.

EP 1 282 324 A1 describes a radio telecommunications system and a method of operating the same with optimised AGPRS resources. An allocation of resources, e.g. time slots on an AGPRS interface in a cellular mobile telecommunications network for packet data is optimised. The AGPRS interface is provided between a packet control unit and a base station controller. The packet control unit determines which cells of the network are least and most loaded and sends a request to the base station controller to reallocate one resource unit. The cell load is calculated as a peak transmission capacity or throughput weighted with relevant quality of service factors.

US 2004/0072571 A1 describes a method and system for a dynamic channel assignment. A channel is allocated for a connection having a certain quality of service between a mobile station and a base station in the network whose timeslots are synchronized with each other. The system collects interference information from connections already in use, information on the traffic load of the network, defines a level value for information to be communicated, forms a parameter value for the channel of the cell and allocates the channel.

US 2003/0017831 A1 describes a telecommunications system and a method for load sharing within a code division multiple access 2000 network. A queue size of a sector (or cell) is compared with a predefined threshold. If the queue size exceeds the predefined threshold, one or more mobile terminals having their data rate control pointed towards that sector are selected to discontinue using that sector. The network transmits a message to the selected mobile terminals informing the selected mobile terminals that their data rate control is no longer valid. In response, the selected mobile terminals stop pointing their data rate control towards that sector, which results in an interruption of the selected mobile terminal's data sessions. To continue their data sessions, each of the selected mobile terminals may initiate a virtual handoff to another sector.

US 6,333,936 B1 describes a method and apparatus for allocating processing resources. A pool of resource units is configured using a structure having plural levels including first level and second level resource blocks. Each first level resource block corresponds to an individual resource unit, where an individual resource unit is the smallest resource that can be allocated from the resource pool. The first level resource blocks are provided in groups. Each second level resource block corresponds to one of the groups of the first level resource blocks. The second level resource blocks are also provided in groups forming a next higher level of the resource pool. If a request is made for a first level resource block, an available first level resource block is allocated. If a first level resource block is not available, then an available first level resource block is created by converting a second level resource block into a corresponding group of first level resource blocks. One of the converted first level resource blocks is then allocated to the request. Resource blocks are restored to their resource unit pool structure first to any incomplete first level resource block grouping. If that returned block completes the grouping, a new second level resource block is made available. The resource pool may be reconfigured as needed to ensure an efficient configuration.

However, the known solutions do not allow efficient scheduling in case the load distribution exhibits traffic bursts.

Therefore, it is the objective of the present invention to create a concept for resource scheduling and for the operation of a mobile communications base station which can efficiently handle traffic bursts.

This objective is achieved by a scheduler according to claim 1, a base station for a mobile communications network according to claim 19, a method for controlling a base station according to claim 26, a method for operating a base station according to claim 27 and a computer program according to claim 28.

The present invention creates a scheduler for controlling a transmitter/receiver (e.g. a base station) among at least a first transmitter/receiver and a second transmitter/receiver, -the first transmitter/receiver and the second transmitter/receiver being adapted to transmit or receive using available total transmit/receive resources, the first transmitter/receiver using first transmission resources and the second transmitter/receiver using second transmission resources, the first transmitter/receiver having a first transmit buffer and the second base station having a second transmit buffer. The inventive scheduler comprises a receiver for receiving information on the load situation of the first transmitter/receiver and the second transmitter/receiver, the load situation including information on an actual buffer fullness of the first buffer and the second buffer at a certain time, and a resource locator for allocating a first portion of the total transmit/receive resources to the first transmitter/receiver, the first portion being different from a second portion of the total transmit/receive resources allocated to the second transmitter/receiver, based on the information on the load situation. The resource allocator is adapted to apply an allocation rule, the allocation rule resulting in more resources allocated to a base station having a higher load compared to a base station having a lower load. Furthermore, the first portion of the total transmit/receive resources and the second portion of the total transmit/receive resources preferably exclude each other. In other words, the first portion and the second portion preferably do not comprise common resources.

It is the key idea of the present invention that resource allocation to a base station can be achieved in an efficient way by applying an allocation rule to information on a load situation describing an actual buffer fullness of transmit buffers of at least two base stations. It was found that the buffer fullness of a base station can be used as an efficient criterion to describe the load of the base station by a single numeric value. Also, it was found that there is a strong correlation between the buffer fullness and the transmission resources required by a base station in order to maintain a desired quality of service (e.g. latency) when communicating data to a mobile communications device. It was further found that the transmit buffer fullness of the base stations describes the load situation of the base stations over both a short period in time (of the order of typically less than 1 second) and a long period in time (typically of the order of more than 10 seconds). In other words, using the buffer fullness the inventive inter-sector scheduler can react to both traffic bursts arriving at a particular base station (resulting in a short term load variation) and to variations of the average load of the base stations (resulting in a long term load variation).

Making use of the buffer fullness of two or more base stations when allocating resources to at least one base station (or to several base stations) brings along a number of advantages when compared to conventional solutions. Firstly, both short-term variations of the load of individual base stations (e.g. due to burst traffic) and long-term variations of the load can be considered for the scheduling, and both types of load variations (short-term and long term) can be described by a single numerical value. Accordingly, a single scheduler can be used to perform the complete required scheduling, and the scheduler does not need to distinguish information on short term load variations and long term load variations.

Furthermore, the amount of data to be exchanged between several mobile communications base stations or between mobile communications base stations and the inter-sector scheduler is small compared to the data traffic required for the application of conventional scheduling techniques. This is due to the fact that according to the present invention only information on the buffer fullness needs to be exchanged. Besides, the buffer fullness can typically be described as a single numerical value. Accordingly, the requirements with respect to links between the base stations (in case the inter-sector schedulers are decentralized and are combined with the base stations) or between the base stations and the inter-sector scheduler (in case there is a dedicated central inter-sector scheduler) are relaxed.

Besides, when calculating the buffer fullness an averaging is automatically performed in the base station for which the buffer fullness is calculated, as the buffer fullness is calculated over all transmission links maintained by the respective base station. Accordingly, the buffer fullness is typically not changing very fast if a base station serves a large number of mobile communication devices due to base station internal averaging of traffic. Accordingly, in a high load situation with communication to many mobile communication devices a constant (or almost constant, i.e. slowly varying) resource allocation can be achieved. In contrast, if only a few devices are connected to a base station, the traffic load and accordingly the buffer fullness may vary very fast. However, the inventive inter-sector scheduler can still generate a resource allocation which is well adapted to the current load situation and which optimizes traffic capacity and latency of the mobile communications system.

Furthermore, the inventive inter-sector scheduler can be implemented both as a centralized or a decentralized inter-sector scheduler, wherein the decentralized solution brings along the advantage that costs for a central control station can be avoided. For a decentralized solution, it is sufficient that communication can be established between the involved base stations to communicate or exchange respective buffer fullnesses (or information about the buffer fullness). Such a communication link requires only a very little data rate and may be set up with little technical effort.

To summarize, the present invention creates an efficient concept for resource scheduling which allows a distributed implementation and requires only a small amount of data exchange between base stations.

In a further preferred embodiment, the receiver is operating to receive, as the information on the load situation, a total buffer fullness information depending on the sum of all buffer fullnesses of base stations in a communication cell and an actual buffer fullness of a certain base station. Furthermore, the resource allocator is preferably operating to allocate resources to the certain base station depending on a ratio of the actual buffer fullness of the certain base station and the total buffer fullness.

In other words, the receiver can receive a total buffer fullness (or a total buffer fullness information) of those base stations which are serving the same cell and whose transmissions may therefore interfere in an overlap region. This information can either be calculated in a centralized total buffer fullness calculator, or can be calculated within the inter-sector scheduler by summing buffer fullness information received from the individual base stations by the inter-sector scheduler. A relative buffer fullness of a certain base station can be determined by forming a ratio of the actual buffer fullness of the certain base station and the total buffer fullness. Accordingly, the relative buffer fullness can be used as a criterion for distributing the resources in a well balanced or 'fair' way. Distribution of the transmission resources based on the relative buffer fullnesses of the base stations results in a uniform distribution of buffer delay times between a number of base stations. Accordingly, a comparable (i.e. similar) latency can be achieved for the packets distributed to the mobile communication devices over the different base stations. Accordingly, even base stations with a very high traffic load can offer a sufficiently fast service to the respective connected mobile communication devices.

In other words, the ratio of the actual buffer fullness of a certain base station and the total buffer fullness of a number of base stations in a communication cell has shown to be a good criterion for resource allocation. The distribution of the total buffer fullness information can be achieved with a minimum coordination effort, an may be preferably calculated as a sum of buffer fullnesses from base stations. The total buffer fullness information can be exchanged over a network connecting the base stations, which allows a completely decentralized resource allocation.

Different types of resources can be allocated to a station. For example, it is preferred that the resources to be allocated comprise OFDM sub-carriers, wherein the allocated OFDM sub-carriers are a member of a set of OFDM sub-carriers available for usage for multiple-base stations serving the communication cell under consideration. Dynamically allocating OFDM sub-carriers brings along a big advantage when compared to conventional systems. Different OFDM carriers can be used simultaneously by different base stations as different OFDM sub-carriers can be separated in a receiver device. Consequently, the resources allocated to the different base stations, i.e. different OFDM sub-carriers or sets of sub-carriers, can be used at the same time by different base stations. Consequently, several base stations can transmit their data at the same time using different OFDM sub-carriers, which significantly reduces latency compared to time domain multiple access schemes (e.g. time slots allocated to different base stations). Short latencies are particularly important for real time services like speech and video transmission. Distributing OFDM sub-carriers based on the buffer fullnesses (or the relative buffer fullnesses) is particularly advantageous as the number of OFDM sub-carriers allocated to the base stations can be scaled in fine steps according to the buffer fullness as there is typically a large number of OFDM sub-carriers available.

Also, resources to be allocated to the base stations can be OFDM sub-bands, wherein an OFDM sub-band combines a plurality of OFDM sub-carriers, and wherein the OFDM sub-bands to be allocated are typically members of a set of OFDM sub-bands available for usage by multiple-base stations serving the communication cell. In other words, OFDM sub-carriers can be grouped into OFDM sub-bands to be allocated more easily. An OFDM sub-band, i.e. a group of OFDM sub-carriers, may be chosen in such a way that the OFDM sub-band allows the best propagation conditions. For example, an OFDM sub-band may comprise adjacent OFDM sub-carriers, which allows a relatively simple coordination between different base stations. Furthermore, an OFDM sub-band may define a number of sub-carriers spaced in frequency so that frequency diversity advantages can be exploited for such a sub-band. Further, it should be noted that the amount of data required for transporting the scheduling information can be reduced significantly by using sub-bands grouping a number of OFDM sub-carriers. Besides, using OFDM sub-bands rather than individual OFDM sub-carriers for resource allocation may improve the ratio of user data transported over the air interface and the required signaling overhead, as sub-bands may be allocated as a whole for a link between a base station and a mobile device.

The scheduled resources can also preferably be OFDM slots. An OFDM slot comprises a plurality of OFDM sub-carriers and a plurality of subsequent OFDM symbols, and the OFDM slot may preferably be a member of a set of OFDM slots available for usage by multiple base stations serving the communications cell. Accordingly, an OFDM slot is an entity defined by discrete OFDM sub-carriers and a time interval. Accordingly, multiple OFDM slots can exist at the same point in time (comprising different OFDM carriers), so that several base stations can communicate with mobile communication devices at the same time using different OFDM slots. Furthermore, the time limitation of an OFDM slot facilitates resource planning within a base station and also reduces the signaling overhead in communication with a mobile communications device. In other words, an OFDM slot defines a data transfer unit. Also, the usage of an OFDM slot defines points in time, the end of the OFDM slot, at which a resource allocation can be changed. To be more specific, after each OFDM time slot resources can be reallocated. Accordingly, the usage of OFDM slots facilitates time synchronization for the resource allocation of different base stations. From the above it is obvious that the usage of an OFDM slot which is formed by a group of neighboring sub-carriers and OFDM symbols, allows a particularly advantageous implementation of the inventive resource scheduling method.

In another preferred embodiment, the resources may be frequency intervals, wherein the frequency intervals are part of a total available frequency allocation, available for usage by multiple base stations serving the communications cell. In other words, the inventive intersector scheduler making use of buffer fullnesses of base stations may also be used to schedule frequency resources in a frequency division multiple access (FDMA) environment.

Similarly, the resources can be time slots from a plurality of available time slots available for usage by multiple base stations serving the communications cell.

Furthermore, the resources may be spatial resources, wherein a spatial resource defines a spatial region on which a base station can concentrate its service. In other words, a spatial resource can, for example, be a partial sector out of a total sector served by a base station. The sector may, for example, be defined by a horizontal and/or vertical angular region. Furthermore, a spatial resource can be defined in terms of a particular distance from a base station. According to the spatial resource, the radiation characteristic of the base station can be controlled to focus the radiation on the selected spatial resource or region. Also, a spatial resource can be accessed by varying the power of transmission for a certain frequency interval or interval in time. Accordingly, distribution of spatial resources may also be an advantageous solution to schedule resources in order to avoid or at least reduce interference of adjacent base stations.

In another preferred embodiment, the inventive inter-sector scheduler further comprises a synchronization unit for synchronizing the operation of the inter-sector scheduler with the operation of at least another inter-sector scheduler. In other words, the inter-sector scheduler may comprise a receiver for receiving a time and/or frequency synchronization information and/or a transmitter for transmitting a time and/or frequency synchronization information. Accordingly, the inter-sector schedulers of several base stations may be time synchronized in order to avoid interference of signals radiated by the different base stations. So, time synchronization of the inter-sector schedulers may help to reduce mutual interference of the base stations, which in turn helps to increase the data transfer capacity in a mobile communications cell.

Furthermore, it is preferred that the allocation rule is adapted such that resources allocated by the resource allocator are not in conflict with the resources allocated by other resource allocators. In other words, the allocation rule is adapted to avoid interference between adjacent base stations serving the same cell. This can be achieved by using a deterministic allocation rule. So, having a time reference and knowing the load situation of the other base stations serving the same cell, the resource allocator of the inventive inter-sector scheduler can allocate resources to the base station in such a way that base stations serving the same cell do not use identical resources at the same time. For example, the allocation rule can be adapted such that different base stations serving the same cell do not use the same OFDM sub-carriers or OFDM sub-bands in any given time interval. Similarly, the allocation rule can be adapted to prevent the usage of the same OFDM slots, frequency intervals or time slots by multiple base stations. In this way, the allocation rule can help to avoid interference between the signals transmitted by several base stations into the same cell. This can reduce the bit-error rate significantly, as the bit-error rate is in many cases limited by interference rather than by (thermal) noise. It should also be noted that in many cases the overall data transfer rate can be increased if a given resource is used by only one base station serving a cell, as the need for data repetition due to interference can be avoided. Thus, an explicit interference cancellation can be avoided so that the complexity of the system can be reduced without a significant impact on the system capacity.

In another preferred embodiment, the resource allocator is operating to allocate resources to the certain base station such that a data transfer capacity (or estimated data transfer capacity) of the resources allocated to the certain base station is proportional to the ratio of the actual buffer fullness and the total buffer fullness, if effects due to resource quantization are neglected. In other words, an estimated data transfer capacity of the resources allocated to the certain base station is preferably proportional to the relative buffer fullness of the certain base station. For example, the number of OFDM sub-carriers allocated to the certain base station may be proportional to the relative buffer fullness of the certain base station. It is assumed that the data transfer capacity of a certain type of resource can be quantified, wherein preferably the same data transfer capacity is assumed for several different resources of the same type (e.g. several OFDM sub-carriers, several OFDM sub-bands, several OFDM slots, frequency ranges or time slots). With respect to frequency ranges, it may be assumed that the frequency bandwidth allocated to the certain base station is proportional to the relative buffer fullness of the certain base station. The same applies to the length of a time slot which may be attributed to the certain base station.

However, slight deviations from the proportionality may occur as resources are typically quantized, which means that resources (for example an OFDM sub-band or an OFDM slot) can only be allocated to a base station as a whole.

For the case that resources are quantized in resource units, the resource allocator is preferably operating to determine, in a first time interval, a number of resource units for allocation to the base station using a first allocation rule, and to determine, in a second time interval, the amount of resource for allocation to the base station using a second allocation rule. The first allocation rule and the second allocation rule are typically adapted such that a rounding error due to resource quantization introduced by the first allocation rule has an opposite direction (or sign) when compared to a rounding error introduced by the second allocation rule. The first allocation rule preferably indicates rounding the product of a total number of available resource units and the ratio of the actual buffer fullness and the total buffer fullness to an integer value in order to obtain the number of resource units for allocation to the base station. The second allocation rule preferably defines obtaining the number of resource units for allocation to the base station as a rest of transmission resource units not allocated to other base stations, wherein the rest is calculated as a difference between the total number of available resource units and at least one rounded value describing a number of resources allocated to another base station. The resource unit in this context may define, for example, an OFDM sub-carrier, an OFDM sub-band, an OFDM slot, a frequency interval or a time interval. It should further be noted that there are two different resource allocation rules which may be applied alternately. The first allocation rule defines the calculation of the number of resource units allocated to the base station directly by rounding the product of the total amount of available resource units and the relative buffer fullness of the base station. In contrast, the second allocation rule indicates first determining the number of resource units allocated to other base stations by rounding the product of the total number of available resource units and respective relative buffer fullnesses of the other base stations. Subsequently, the number of resource units allocated to the base station is calculated by subtracting the number of resource units allocated to the other base stations from the total amount of available resource units. In this way, two different allocation rules can be applied for the allocation of resources in different time intervals, wherein in the first time interval rounding is applied directly to the amount of resources allocated to the base station, and wherein in the second time interval rounding is applied to the number of resource units allocated to the other base stations.

Accordingly, rounding errors are treated differently in the first and second time interval, so that the effects of rounding are balanced out.

The rounding and allocation based on rounding and the allocation of the rest of the resources may result in an unfair allocation for the transmitter/receiver which receives resources based on rounding when rounding to a lower number takes place. When rounding to a higher number takes place, the transmitter/receiver receiving the rest is unfairly treated. To overcome this unfair allocation, it is preferred to rotate the transmitter/receiver which allocation is done based on the remainder of the total resources, i.e., when all transmitter/receivers whose allocation relies on rounding are processed.

It should further be noted that rounding preferably means rounding down in the sense of applying a floor function in order to avoid over-allocation of resources. Accordingly, in the first time interval the resources allocated to the base station are typically rounded down to the next integer number of resource units, so that less resources are allocated to the base station than theoretically required in a fair distribution scheme. In contrast, in the second time interval it may be assumed that the resources allocated to the other base stations are rounded down. If the rest of resource units not allocated to the other base stations is allocated to the base station, typically more resources than actually required when considering a fair allocation scheme are allocated to the base station. Accordingly, in the second time interval the base station gets more resources when compared to a fair distribution, whereas the base station gets less resources (when compared to the fair distribution scheme) in the first time interval. As a consequence, the described effects average out in the first time interval and in the second time interval, so that overall a very well-balanced resource allocation can be achieved. The described resource allocation scheme is particularly important if there are only a few resource units available, so that quantization (or rounding) effects become particularly significant.

The resource allocation schemes described for the first time interval and the second time interval may of course be repeated (for example in a regular scheme). For such repetition, however, it is not necessary to alternately use a calculation scheme described for the first time interval in the second time interval, but the calculation described for the first time interval may be repeated several times before an allocation described for the second time interval is executed. Accordingly, a improved allocation scheme can be achieved even in the presence of more than two base stations.

The resource allocator may further be adapted to allocate resources for at least the first base station and the second base station based on the information on the load situation, and inter-sector schedulers may further comprise a resource allocation distributor for distributing information on the resource allocation to at least the first base station and the second base station. In other words, the inventive resource allocator may be centralized so that one individual resource allocator can allocate resources for more than one base station. For the allocation of resources to the different base stations, different allocation rules may be used, and the allocation rules may be adapted such that interference between the base stations can be avoided. In other words, the allocation rules (i.e. at least the allocation rule for the allocation of resources to the first base station and the allocation rule for the allocation of resources to the second base station) may be adapted such that a particular resource is allocated to no more than one of the base stations at one time (or for one time interval). In the case of such a centralized inter-sector scheduler, the information on the resource allocation is preferably distributed to the at least two base stations for which the inter-sector scheduler allocates the resources. The information on the resource allocation may be transmitted in a wired or a wireless way. Also, the information on the resource allocation may be transferred to different base stations using different transmission mechanisms. Also, it is possible that the inter-sector scheduler is a part of one base station, and that only a short-distance link is necessary for reporting information on the resource allocation to the base station with which the inter-sector scheduler is combined. In contrast, a long-distance link may be necessary to report the information on the resource allocation to another base station or to several other base stations.

However, a centralized resource allocator as described above is advantageous as the resources can be allocated jointly for a plurality of base stations. In this way, it can easily be ensured that different resources are allocated to different base stations, so that interference can be avoided. Accordingly, the allocation rule may be simplified.

In another preferred embodiment, the resources are time and/or frequency slots, and the resource allocator is adapted to determine, for the at least two base stations, the number of slots to be allocated to the base stations. The resource allocator is preferably further adapted to alternately allocate subsequent adjacent slots to the at least two base stations, as long as less slots than the number of slots to be allocated have been allocated to at least one out of the at least two base stations. In other words, adjacent slots are allocated to at least two different base station in an interleaved way. Interleaving slots allocated to different base stations with respect to frequency can result in a frequency allocation which allows making use of advantageous frequency diversity effects. Accordingly, a particularly reliable data transmission can be achieved with the described interleaving resource allocation scheme.

It should further be noted that an interleaved resource allocation can be obtained by allocating subsequent adjacent slots to the at least two base stations using a Round Robin procedure.

In another preferred embodiment the resource allocator is adapted to determine for the at least two base stations the respective number of slots to be allocated to the base station, and to allocate to the first base station a first contiguous block of adjacent slots, and to allocate to the second base station a second contiguous block of adjacent slots. The first block of slots preferably comprises the respective number of slots to be allocated to the first base station, wherein the second block of slots preferably comprises the respective number of slots to be allocated to the second base station. In other words, the slots allocated to the first base station form one contiguous block of slots, and the slots allocated to the second base station form another contiguous block of slots. Such a block-wise application of resources to the base stations is advantageous as a block-wise allocation is particularly robust with respect to synchronization of slots between base stations.

In a further preferred embodiment, the resource allocator is adapted to distribute the resources allocated to the base station to the plurality of data connections maintained by the base station. In other words, an intra-sector allocation is further performed by the resource allocator. Here, it is preferred to perform inter-sector allocation and intra-sector allocation separately. Such a procedure minimizes the data exchange between base stations and at least one inter-sector scheduler. Furthermore, computational effort is minimized due to the separate inter-sector scheduling and intra-sector scheduling while still obtaining sufficient scheduling gain. In particular, short-term channel knowledge need not be exchanged between base stations and the at least one inter-sector scheduler.

Furthermore, the present invention creates a base station for a mobile communications network, the mobile communications network having a first base station and a second base station adapted to transmit into or receive from the same communication cell. The inventive base station comprises a transmit buffer for buffering data to be transmitted from the base station to a mobile device, a transmit buffer fullness determinator for determining an information on a load situation of the base station including information on actual fullness of the transmit buffer, an optional transmit buffer fullness sender for transferring the information for the load situation including the information on the buffer fullness of the base station to at least one other base station and an inter-sector scheduler. The inter-sector scheduler comprises a receiver for receiving an information on a load situation of at least one other base station, the information on the load situation of the other base station including information on an actual buffer fullness of a transmit buffer of the at least one other base station. The inter-sector scheduler further includes a resource allocator for allocating resources to the base station based on the information on the load situation of the base station and the information on the load situation of the at least one other base station, wherein the resource allocator is adapted to apply an allocation rule. The allocation rule defines that more resources are allocated to a base station having a higher load compared to a base station having a lower load.

The inventive base station performs resource allocation based on the information on an actual buffer fullness of the transmit buffer of the base station and an information on the buffer fullness of another base station. As already mentioned above, it was found that the buffer fullness of base stations is a quantitative value which can be used for an efficient scheduling of resources.

In another preferred embodiment, the base station further comprises a sender for transferring data to be transmitted to a specific mobile communications device and contained in the transmit buffer to another base station upon detecting that the specific mobile communication device is served by the other base station. A buffer controller preferably deletes the data transferred to the other base station from the transmit buffer.

It has been shown that a hand-over of a communications device from one base station to another base station can be performed efficiently in combination with the inventive base station evaluating the buffer fullness of the transmit buffer. Resources can automatically be redistributed as soon as data are deleted from a transmit buffer, which preferably occurs when a mobile communications device is handed over from one base station to another base station. In other words, due to the inventive mechanism of evaluating the buffer fullness of the transmit buffer an explicit signaling and resource allocation is not necessary whenever data for transmission to a mobile communications device are handed over form one base station to another base station. In contrast, the buffer fullness is changed automatically by deleting the data from the transmit buffer as soon as the data are transferred to another base station to which the mobile communications device is handed over.

It should further be noted that the base station receives data to be transmitted to the mobile communications device if the base station takes over responsibility for serving a specific mobile communications device. Accordingly, the buffer fullness changes, which can again be directly evaluated for reallocating the resources.

It should further be noted that the base station can detect that the specific mobile communications device is served by another base station by receiving a notification from either the mobile device itself or from the other base station. Furthermore, the base station may delete the content of the transmit buffer for the specific mobile communications device, if the base station detects that contact to the specific mobile communications device has broken (e.g. if the specific mobile communications device does not respond for a specific period of time). Furthermore, the base station may detect that data in the transmit buffer are outdated and accordingly delete the data from the transmit buffer, e.g. under control of the buffer controller. Again, the resource allocation can automatically be adjusted as soon as the buffer fullness is evaluated.

In order to achieve a fast resource reallocation after any hand-over of the communications device from one base station to another base station, the buffer controller may preferably be adapted to initiate a determination of the information on the load situation of the base station after deleting data transferred to another base station from the transmit buffer. In other words, it may be assumed that the load situation of a base station may change significantly whenever a mobile communications device is handed over from one base station to another base station, which results in a deletion of data in the transmit buffer. Therefore, an immediate re-evaluation of the load situation may be advantageous in response to transferring a mobile communications device from one base station to another base station. In this way, sufficient resources can be allocated to the new base station handling the mobile communications device as soon as possible.

Accordingly, upon deleting the data transferred to the other base station from the transmit buffer, an information on the load situation including an information on the buffer fullness of the base station may be transferred to at least one other base station. Furthermore, the base station may have any of the characteristics of the above described inter-sector controller.

In another preferred embodiment, the base station comprises a receiver for receiving data to be transmitted to a particular mobile communications device from another base station, and a buffer controller adding the data to be transmitted to the particular mobile communications device to the transmit buffer. The buffer controller is preferably adapted to initiate a determination of the information on the load situation of the base station after adding the data received from the other base station to the transmit buffer. Again, a hand-over of a mobile communications device to the base station may be considered an event which may have a strong impact on the load of several base stations and which should therefore result in a reallocation of the resources.

Preferred embodiments of the present invention will subsequently be described with reference to the enclosed figures, in which:

Fig. 1a    shows a block schematic diagram of an inventive inter-sector scheduler according to a first embodiment of the present invention;

Fig. 1b    shows a block schematic diagram of an inventive inter-sector scheduler according to a second embodiment of the present invention;

Fig. 2a    shows a block schematic diagram of an inventive base station according to a third embodiment of the present invention;

Fig. 2b    shows a flow diagram of an operation of a mobile communications network comprising an inventive base station;

Fig. 3a    shows a block schematic diagram of an inventive resource scheduler according to a fourth embodiment of the present invention;

Fig. 3b    shows a schematic representation of OFDM slots scheduled by the inventive resource scheduler according to the fourth embodiment of the present invention;

Fig. 4    shows a graphic representation of link packet error rates for different modulation types on an AWGN channel;

Fig. 5    shows a block diagram of an inventive Round Robin for assigning slots to sectors;

Fig. 6    shows a graphic representation of an idealized antenna pattern;

Fig. 7    shows a graphic representation of a user distribution randomly distributed within mobile communication cells for the purpose of a simulation;

Fig. 8    shows a graphic representation of a division of a cell into regions that cover 25% each of the service area;

Fig. 9a    shows a graphic representation of a probability for a packet delay $\tau$ exceeding T[s] for a mobile communications system comprising an inventive base station and for a conventional communications system, for Poisson data traffic;

Fig. 9b    shows a graphic representation of a probability for a packet delay $\tau$ exceeding T[s] for a mobile communications system comprising an inventive base station and for a conventional mobile communications system, burst data traffic;

Fig. 10a    shows a graphic representation of an average packet delay for a mobile communications system comprising an inventive base station and for a conventional mobile communications system, for Poisson data traffic;

Fig. 10b    shows a graphic representation of an average packet delay for a mobile communications system comprising an inventive base station and for a conventional mobile communications system, for burst data traffic;

Fig. 11a    shows a graphic representation of ratios between average packet delays for a mobile communications system comprising the inventive base station and for a conventional mobile communications system, for Poisson data traffic;

Fig. 11b    shows a graphic representation of ratios between average packet delays for a mobile communication system comprising the inventive base station and a conventional mobile communication system, for burst data traffic;

Fig. 12a    shows a graphic representation of an outage probability for a mobile communications system comprising the inventive base station, and for a conventional mobile communications system, for Poisson data traffic; and

Fig. 12b    shows a graphic representation of an outage probability for a mobile communications system comprising the inventive base station and a conventional mobile communications system, for burst data traffic.

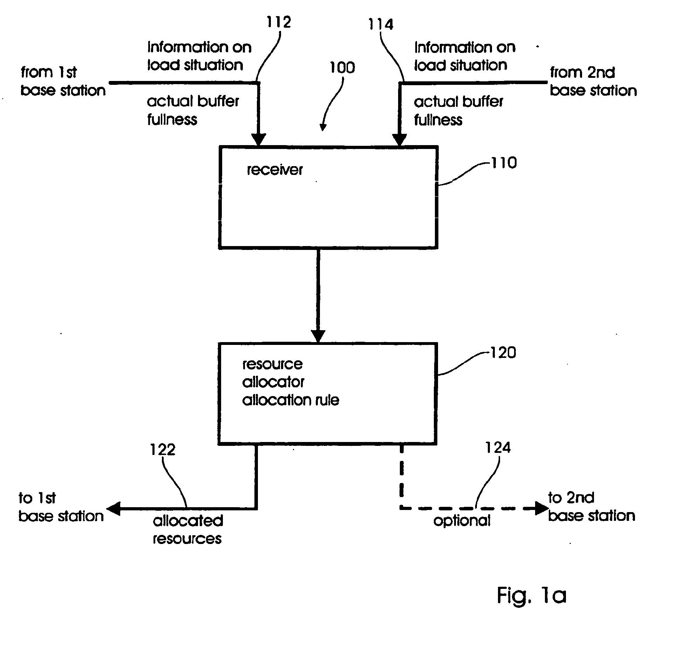

Fig. 1a shows a block schematic diagram of the inventive inter-sector scheduler according to a first embodiment of the present invention. The inter-sector scheduler of Fig. 1a is designated in its entirety with 100. The inventive inter-sector scheduler comprises a receiver 110 which receives an information 112 on a load situation of a first base station from the first base station. The information 112 on the load situation includes an actual buffer fullness of the first base station. The receiver 110 further receives an information 114 on a load situation of a second base station from the second base station. The information 114 on the load situation includes an information on an actual buffer fullness of the second base station. The receiver 110 forwards the information 112 on the load situation of the first base station and the information 114 on the load situation of the second base station to a resource allocator 120. The resource allocator determines allocated resources according to an allocation rule and provides an information 122 on the allocated resources at least to the first base station. Optionally, the resource allocator 120 may also provide an information 124 on allocated resources to the second base station, wherein the information 122 on the allocated resources sent to the first base station is typically different from the information 124 on the allocated resources sent to the second base station. However, the resource allocator 120 may also send the same information on the allocated resources to both the first base station and the second base station, wherein the information send to both base stations comprises resource allocation to both base stations in a form from which each of the base stations can derive the respective resource allocation.

Based on the above structural description, the function of the inventive inter-sector scheduler will be described in detail below. It is assumed that the inventive inter-sector scheduler is part of a mobile communications network and is used for controlling a base station out of at least a first base station and a second base station. Furthermore, it is assumed that the first base station and the second base station are adapted to transmit to or receive from the same communication cell. In other words, within one communication cell (or at least within a part of the communication cell) signals radiated by the first base station and by the second base station can be received. Furthermore, it is assumed that the first base station uses first transmission resources and that the second base station uses second transmission resources, wherein transmission resources may, for example, comprise sub-carriers, OFDM sub-bands (comprising a plurality of OFDM sub-carriers), OFDM slots (representing a set of sub-carriers over a number of OFDM symbols), frequency intervals or time slots. Furthermore, it should be noted that the first base station and the second base station are both assumed to have respective transmit buffers for storing data to be transmitted into the communication cell which is served both by the first base station and the second base station. It should further be noted that in the present invention a base station is assumed to be a means for serving a certain spatial area. The transmit buffer of a base station in the sense of the present application is a buffer which stores data for transmission at least into the spatial area which is served by both the first base station and the second base station. In other words, throughout the present application the term "transmit buffers of different base stations" designates transmit buffers for transmission into the same spatial area or communication cell.

Accordingly, the information 112 on the load situation of the first base station and the information 114 on the load situation of the second base station carries information on the total amount of data to be transmitted into the spatial region (or regions) where both the first base station and the second base station can be received. According to the present invention, it could be shown that the actual buffer fullness reported by the first base station and the actual buffer fullness reported by the second base station may advantageously be used by the resource allocator 120 in order to allocate resources to the first base station and the second base station. Resources allocated to the first base station can be determined by the resource allocator 120 by applying an allocation rule. The allocation rule according to the present invention evaluates at least the information 112 on the load situation of the first base station and the information 114 on the load situation of the second base station in order to determine the resources to be allocated to the first base station. It is preferred to allocate the resources based on the actual buffer fullness of the first base station and the actual buffer fullness of the second base station, as the actual buffer fullness is a combined information on the traffic load of the base stations and on the priority to transmit data from the base stations in a single numerical value.

The allocation rule in the resource allocator 120 is preferably adapted to result in more resources allocated to a base station having a higher load compared to a base station having a lower load. In other words, if the load of a base station is increasing, more resources are allocated to the respective base station provided the load of the other base station (or the other base stations) remains constant or even decreases. In this context, the terms 'higher load' and 'lower load' may designate an absolute load of a base station but also a relative load of a particular base station when compared to the other base stations.

According to the present invention, transmit resources may be allocated to the base station in a fair way, wherein base stations having a large actual buffer fullness may obtain more resources than base stations having a small actual buffer fullness at a certain point in time. It was found that the buffer fullness is a good criterion for indicating both short-term load peaks due to burst traffic and average traffic load. For example, whenever the actual buffer fullness of the first base station increases due to a traffic peak or due to an increase of the average load, the inventive inter-sector scheduler will allocate more resources to the first base station, provided the load situation of the second base station (s) has remained constant. Accordingly, the buffer fullness of the first base station will typically be reduced gradually due to the additionally allocated resources.

It should further be noted that the inventive inter-sector scheduler provides an information 122 on the allocated resources to the first base station. Optionally, the inventive inter-sector scheduler 100 can also provide an information 122 on allocated resources to the second base station, where the resources allocated to the first base station and the resources allocated to the second base station are preferably determined by the allocation rule in such a way that the first base station and the second base station do not interfere in the shared mobile communication cell (i.e. mobile communication cell to which both the first base station and the second base station are transmitting).

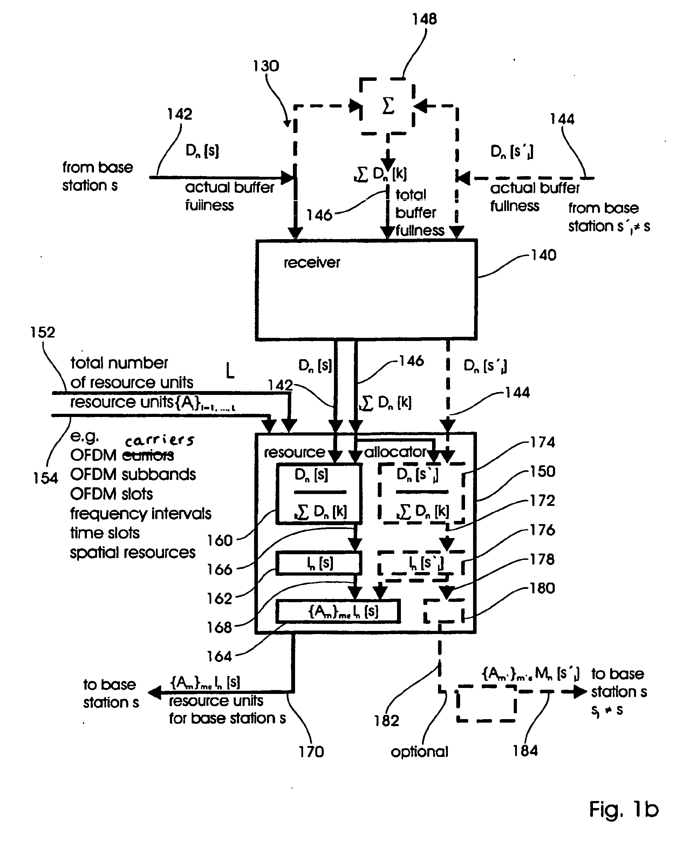

Fig. 1b shows a block schematic diagram of the inventive inter-sector scheduler according to a second embodiment of the present invention. The inter-sector scheduler of Fig. 1b is designated in its entirety with 130. The inter-sector scheduler 130 comprises a receiver 140 which is adapted to receive an information $D_n[s]$ 142 on an actual buffer fullness of a transmit buffer of a base station s. It should be noted here that the index n designates a certain point or interval in time, and that the index s designates a certain base station. The receiver 140 further receives an information $D_n[s'_j]$ 144 from other base stations $s'_j$ with $s'_j \neq s$. The information on the actual buffer fullnesses of the other base stations $s'_j$ is designated with 144. It should also be noted that the information 144 on the actual buffer fullnesses of the other base stations $s'_j$ is optional. Furthermore, the receiver 140 receives an information 146 on a total buffer fullness

$$\sum_k D_n[k].$$ It should be noted here that the information 146 on the total buffer fullness can either be received from an external unit or can optionally be formed in a summer 148 by summing the information 142 on the actual buffer fullness of the base station s and the information 144 on the actual buffer fullness of the other base stations $s'_j$. The receiver provides at least the information 142 on the actual buffer fullness of the base station s and the information 146 on the total buffer fullness to a resource allocator 150. The receiver 140 may further optionally provide the information 144 on the actual buffer fullnesses of the other base stations $s'_j$ to the resource allocator 150. The resource allocator 150 further receives as an input value a total number L 152 of available resource units as well as a set 154 of resource units $\{A_i\}_{i=1,...L}$. It should be noted here that both the total number 152 of resource units and the set 154 of resource units can be stored within the resource allocator, but may also be provided to the resource allocator 150 externally. It should further be noted that the total number 152 of resource units describes a number of quantized resource units, wherein the resource units can be, for example, OFDM carriers, OFDM sub-bands, OFDM slots, frequency intervals, time slots and/or spatial resources. In other words, the total number 152 of resource units describes how many distinguishable and/or separately allocatable resource units exists.

The resource allocator 150 comprises a relative load calculator 160, a resource quantity calculator 162 and a resource unit selector 164. The relative load calculator 160 receives both the information 142 on the actual buffer fullness of base station s and the information 146 on the total buffer fullness. The relative load calculator 160 then calculates a relative load value 166 by calculating a ratio between the information 142 on the actual buffer fullness of the base station s and the information 146 on the total buffer fullness. Based on the relative load value 166, the resource quantity calculator 162 calculates a respective quantity of resource units $I_n[s]$. The number of allocated resource units is designated with 168, and is fed to the resource unit selector 164. The resource unit selector 164 uses the number 168 of allocated resource units to select a set 170 of resource units for base station s. The set 170 of resource units for base station s is also designated with $\{A_m\}_{m \in \ln[s]}$. The information on the set 170 of resource units for base station s is then transferred to the base station s, wherein a transmitter may optionally be involved in transferring the information 170 to the base station s.

The set 170 of resource units for base station s is selected by resource unit selector 164 as a subset of the set 154 of available resource units, wherein the number of resource units contained in the set 170 of resource unit for base station s is determined by the number 168 of resource units to be allocated.

Accordingly, the determination (or allocation) of the set 170 of resource units for base station s in the resource allocator 150 is a three-step process. In a first step relative load values 166 are derived from the information 142 on the actual buffer fullness and from the information 146 on the total buffer fullness. In the second step the number 168 of resource units to be allocated is determined from the relative load value 166. Finally, resource units 170 are selected by the resource unit selector 164 based on the number 168 of resource units to be allocated and the total set 154 of available resource units.

It should further be noted that the resource allocator 150 may optionally also calculate relative load values 172 for the other base stations $s_j{'}$ in a second load value calculator 174. The relative load values 172 for the other base stations may then be fed into an optional second resource quantity calculator 176 in order to calculate the numbers 178 of resource units to be allocated to the other base stations. The numbers 178 of resource units to be allocated to the other base stations may then be fed both to the resource unit selector 164 and to a second resource unit selector 180. The second resource unit selector 180 may preferably be adapted to select resource units 182 for the other base stations $s_j{'}$, represented by an information on allocated resource units. Information 182 on the resource units allocated to the other base stations $s_j{'}$ may be fed into an optional resource unit transmitter 184 which is adapted to transmit the information 182 on the resource units allocated to the other base stations $s_j{'}$.

It should be noted that the second relative load calculator 174 may be similar to the relative load calculator 160, and that the second resource quantity calculator 176 may be similar to the resource quantity calculator 162. Also, the second resource unit selector 180 may be comparable to the resource unit selector 164.

It should further be noted that the resource unit selector 164 may use both the number 168 of resource units to be allocated to the base station s as well as the numbers 178 of resource units to be allocated to the other base stations $s_j{'}$ for selecting the set 170 of resource units for base station s from the set 154 of available resource units.

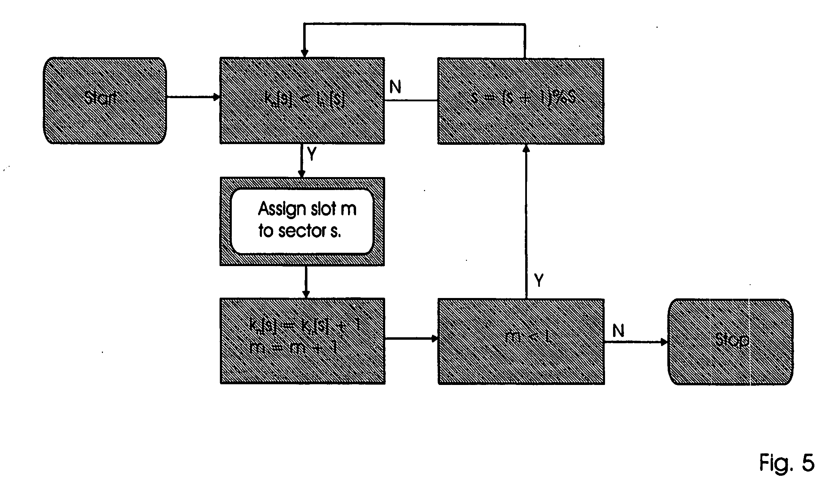

Details of the selection of resource units in the resource selector 164 will be described below with reference to Fig. 5. Also, equations (1), (2) and (3) describe an exemplary calculation of the numbers 168, 178 of resource units to be allocated to base station s and base stations $s_j{'}$.

It should further be noted that resource allocator 150 may operate dependent on a time interval n and that the resource allocator may be coupled with other resource allocators for the purpose of time synchronization. Depending on the time interval n, the resource allocator may apply different allocation rules. For example, different allocation rules may be adapted to evenly distribute rounding errors, as will be described below with reference to equations (2) and (3).

Furthermore it should be noted that the described calculation scheme in resource allocator 150 is to be considered exemplary. It is not necessary to separate resource allocation into three steps. In contrast, it may be possible to allocate resources directly based on the relative load value 166. This may be advantageous if resources are continuous rather than discrete (e.g. continuously adjustable frequency ranges or time intervals). Further, it should be noted that it is preferred to select resource units such that a data transport capacity of the set 170 of resource units for base station s is approximately proportional to the relative load value 166 for base station s. For this purpose, it can be assumed that the transport capacity of resource units is proportional to the number of allocated resource units. However, weighting factors could be introduced in order to indicate that some resource units have a higher data transfer capacity than others.

Furthermore, it should be noted that the resource allocator 150 is preferably adapted to allocate resource units for base station s such that base station s does not interfere with the other base stations $s_j{'}$. In other words, it is preferred that the resource allocator 150 (or the resource unit selector 164) allocates different resource units to different base stations at a given time or for a given time interval. In other words, one resource unit out of the set 154 of available resource units is preferably only allocated to at most one base station at a given time or for a given time interval. Furthermore, resource units of the set 154 of available resource units are preferably chosen such that different resource units from the set 154 of resource units do not cause interference. For example, the individual resource units from the set 154 of resource units may be orthogonal in time and/or frequency. Such a choice of the available resource units out of the set 154 of resource units can ensure that any two different resource units from the set 154 of resource units will not cause interference.

It should further be noted that the relative load calculator 160, the resource quantity calculator 162 and the resource unit selector 164 implement a resource allocation rule.

The inventive inter-sector scheduler 130 brings along the advantage that transmission resources can be allocated to at least one base station s based on the actual buffer fullness information 142 and the total buffer fullness information 146. This resource allocation method results in a resource allocation that brings along a very good performance of a mobile communication system. Also, the quantity of data to be transmitted to the inventive inter-sector scheduler 130 and the amount of data generated by the inventive inter-sector scheduler 130 is reasonably low.

Further computational complexity of the inventive inter-sector scheduler 130 is low, so the inventive inter-sector-scheduler 130 can be implemented even in a microcontroller system. Accordingly, the usage of a complex resource allocation system can be avoided, which reduces costs and increases reliability.

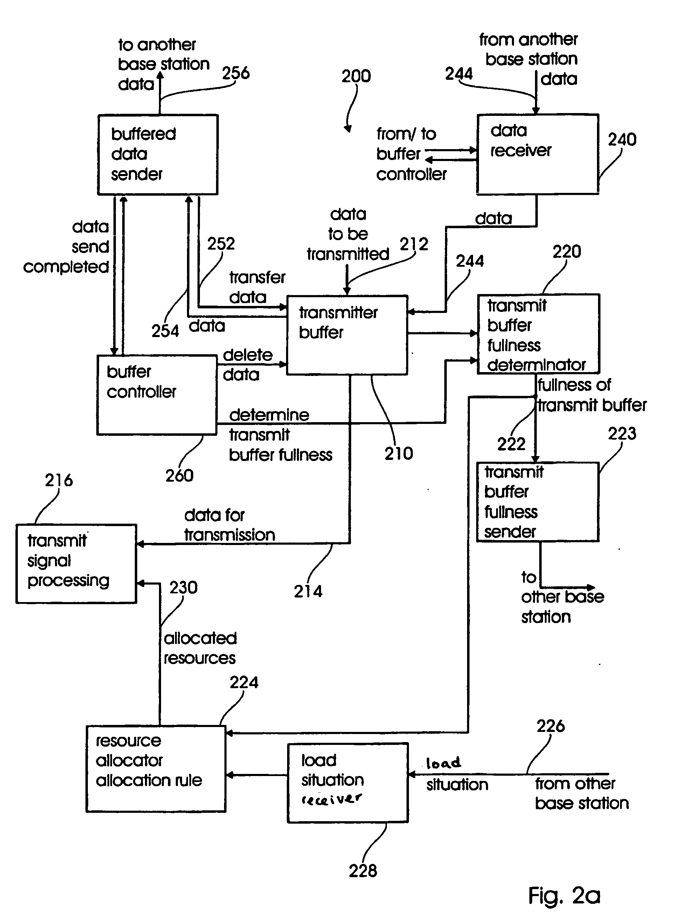

Fig. 2a shows a block schematic diagram of an inventive base station according to a third embodiment of the present invention. The base station of Fig. 2a is designated in its entirety with 200. A transmit buffer 210 is a central component of base station 200. The transmit buffer receives data 212 to be transmitted to a mobile communications device. Furthermore, the transmit buffer 210 can output data 214 for transmission to the mobile communications device as soon as the transmission of such data is scheduled. The data 214 for transmission to the mobile communications device are output from the transmit buffer 210 to a transmit signal processing unit 216. Furthermore, a transmit buffer fullness determinator 220 is coupled with transmit buffer 210, and the transmit buffer fullness determinator 220 is adapted to determine the buffer fullness of transmit buffer 210. Transmit buffer fullness determinator 220 can output an information 222 on a actual buffer fullness of the transmit buffer 210. The information 222 on the actual fullness of the transmit buffer 210 is output by the transmit buffer fullness determinator 220 to a resource allocator 224. The information 222 on the fullness of the transmit buffer can also be sent to at least one other base station using transmit buffer fullness sender 223. The resource allocator 224 further receives an information 226 on a load situation of other base stations from the other base stations over a receiver 228. The resource allocator 224 determines resources to be allocated to the transmit signal processing unit 216 based on the information 222 on the actual fullness of the transmit buffer 212 and on the information 226 on the load situation of the other base stations. Using an allocation rule, the resource allocator 224 determines an information 230 on the resources to be allocated to the transmit signal processing unit 216 and transfers the information 230 on the resources to be allocated to the transmit signal processing unit 216 to the transmit signal processing 216.

The transmit buffer 210 is further coupled with a receiver 240. The receiver 240 is adapted to receive data 242 to be inserted into the transmit buffer 210 and forward the received data 244 to the transmit buffer 210. The transmit buffer 210 is further coupled with a buffer data sender 250, and the buffer data sender 250 is adapted to issue a transfer data signal 252 to the transmit buffer 210 and to receive data 254 to be sent to another base station from the transmit buffer 210. Furthermore, the buffer data sender 250 can transmit the data 254 received from the transmit buffer 210 to another base station as transmit data 256.

The base station 200 further comprises a buffer controller 260. The buffer controller 260 is coupled to the receiver 240 receiving data from another base station, the buffer data sender 250, the transmit buffer 210 and the buffer fullness determinator 220.

The buffer controller 260 is particularly important for handing over mobile communications devices from the base station 200 to another base station, or from handing over a mobile communications device from another base station to the base station 200. When a mobile communications device is handed over from another base station to the base station 200 under consideration, the receiver 240 receives data 242 to be inserted into the transmit buffer 210 from the other base station, and forwards the received data 244 to the transmit buffer 210. Furthermore, the receiver 240 notifies the buffer controller 260 and/or the transmit buffer 210 that the received data 244 are to be inserted into the transmit buffer 210. Furthermore, the buffer controller 260 preferably signalizes to the transmit buffer fullness determinator 220 that the actual fullness of the transmit buffer 210 should be re-determined after the received data 244 has been inserted into the transmit buffer 210. This mechanism allows updating the information 222 on the fullness of the transmit buffer as soon as a mobile communications device has been handed over to the current base station 200. Based on the updated information 222 on the actual fullness of the transmit buffer, the resource allocator 224 can recalculate the information 230 on the resources to be allocated to the current base station 200. Accordingly, the transmit signal processing 216 can negotiate resource assignment with the handed-over mobile communications device based on the updated information 230 on resources allocated to the current base station 200.

According to this procedure, resource allocation can be automatically updated as soon as a mobile communications device is handed over to the current base station 200. However, resource allocation is not based on the number of mobile communications devices connected to the base station 200 but rather on the actual buffer fullness of the transmit buffer 210. In other words, handing over a device from another base station to the current base station 200 will only affect resource allocation if data to be transmitted to the handed-over mobile communications device is added to the transmit buffer 210 of the current base station 200. In this way, a resource allocation can be achieved which is dependent on the actual resource requirements of the mobile communications devices connected to the current base station 200. If a device with a high data transmit volume is handed over to the current base station 200, the resource allocation will probably be increased for the current base station 200, while resource allocation will remain unchanged if there are no data (or if there is only a relatively small data volume) to be transmitted to the handed-over mobile communications device.

A similar procedure occurs when a mobile communications device is handed over from the current base station 200 to another base station. In this case, buffer controller 260 or buffer data sender 250 will be notified that the respective mobile communications device is to be handed over to another base station. In this case, buffer data sender 250 may indicate to the transmit buffer 210 that data related to the particular device to be handed over to the other base station are to be retrieved from the transmit buffer 210. Accordingly, buffer data sender 250 receives the data 254 to be sent to the other base station from the transmit buffer 210. Upon transmitting the data 254 received from the transmit buffer 210 as transmit data 256, the buffer data sender 250 reports to the buffer controller 260 that the transfer of the data 256 to the other base station is completed. In reply to this notification, buffer controller 260 instructs the transmit buffer 210 to delete the data for the mobile communications device which was handed over to the other base station, i.e. whose transmit data have been sent to the other base station by the data buffer sender 250. Upon deletion of the respective data from the transmit buffer 210, the buffer controller 260 sends a request to the transmit buffer fullness determinator 220 to update the information 222 on the actual fullness of the transmit buffer 210. As soon as the information 222 on the actual fullness of the transmit buffer is updated, resource allocator 224 can determine updated information 230 on resources to be allocated to the current base station 200, and the transmit signal processing unit 216 can redistribute the available resources to the mobile communications devices still connected to the current base station 200 (i.e. distribute the resources to connections with the connected mobile communications devices).

The described procedure allows a dynamic resource allocation as soon as a mobile communications device is handed over from the current base station 200 to another base station. Again, resource allocation is based on the information 222 on the actual buffer fullness of transmit buffer 210. So, a demand-oriented resource allocation can be achieved using a relatively simple and resource efficient mechanism.

It should further be noted that the buffer controller 260 can be omitted provided the buffer data sender 250 and the receiver 240 can communicate directly with the transmit buffer 210. Also, transmit buffer 210 may include a control circuit so that an explicit buffer controller 260 is not necessary. Also, buffer data sender 250 and receiver 240 may communicate directly with the transmit buffer fullness determinator 220.

Furthermore, resource allocator 224 can be external to the base station, wherein the information 222 on the actual fullness of the transmit buffer and the information 230 on the resources to be allocated to the current base station 200 need to be exchanged between the current base station 200 and an external resource allocator 224. In other words, the components of the base station 200 can be spatially distributed.

Furthermore, the base station 200 can be time ad/or frequency synchronized with other base stations in order to avoid mutual interference between several base stations. Synchronization may preferably be achieved by including a synchronization information receiver and/or a synchronization information transmitter into the base station 200, wherein the synchronization receiver and/or the synchronization transmitter may preferably be used to exchange time synchronization information. Further, a frequency synchronization circuit may also be included in the base station 200, the frequency synchronization circuit adapted to synchronize a carrier frequency and/or OFDM sub-carrier frequencies between several base stations. E.g. a base station may comprise a circuit distributing (receiving and/or transmitting) a reference clock signal including time synchronization marks.

Furthermore, for synchronization purposes it may be necessary to determine the information 222 on the actual fullness of the transmit buffer regularly and/or at a given point in time. Accordingly, transmit buffer fullness determinator 220 may be adapted to determine the information 222 on the actual fullness of the transmit buffer not immediately after handing over a mobile communications device from another base station to the current base station 200 or from the current base station 200 to another base station, but at the next allowable point in time after such a hand-over. In other words, there may be a scheduled point in time (or a series of scheduled points in time) when information required for resource allocation is exchanged between other base stations. Thus the transmit buffer fullness determinator 220 may be instructed to calculate the information 222 on the actual transmit buffer fullness for the next scheduled point in time after a hand-over occurs.

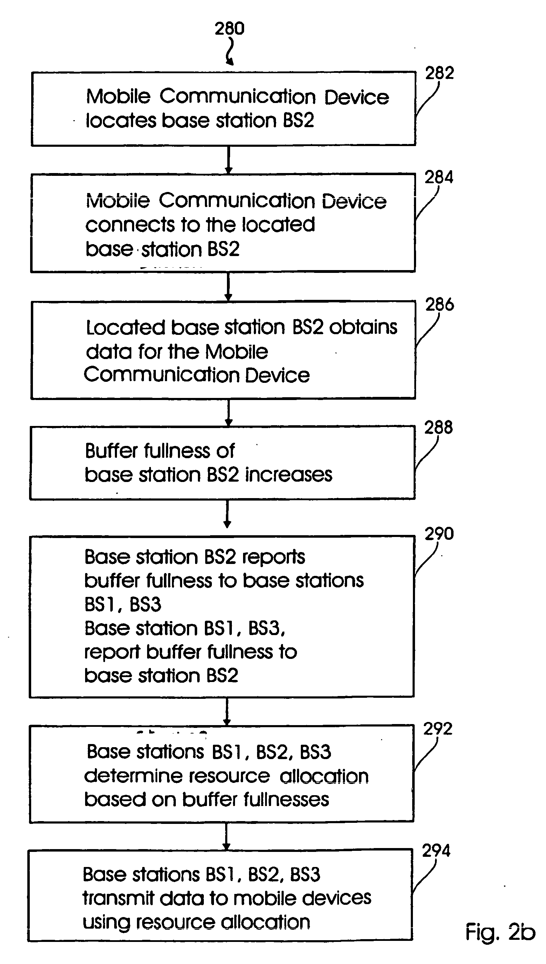

Fig. 2b shows a flow diagram of an operation of a mobile communication network comprising a inventive base station. It is assumed that the mobile communications device is not connected to a base station BS2 before the execution of the shown flow diagram. It should further be noted that the flow diagram of Fig. 2b is designated in its entirety with 280. In a first step 282, the mobile communications device locates base station BS2. In this step, the mobile communications device determines that base station BS2 is the base station to which an optimal communication connection can be established. This assessment may be based on the signal strength with which the base station BS2 can be received by the mobile communications device or may be based on a channel estimation. However, other criteria may also have an impact on locating base station BS2 as the preferred base station.

In a second step 284, the mobile communications device connects to the located base station BS2. The second step 284 may comprise exchange of an identification information between the mobile communications device and base station BS2 and/or the determination of a channel estimation. As a consequence of the connection between the mobile communications device and the located base station BS2, the located base station BS2 obtains data for transmission to the mobile communications device in a third step 286. In the third step 286, the located base station BS2 may notify a network node of the underlying mobile communications network that the particular mobile communications device has connected to the base station BS2. Accordingly, the network node may forward this information to the base station to which the mobile communications device was connected previously, and the base station to which the mobile communications device was connected previously may transfer the contents of the transmit buffer for the respective mobile communications device to the current base station BS2. Also, new data to be sent to the mobile communications device may be routed to the base station BS2 by the mobile communications network. Accordingly, the buffer fullness of the current base station BS2 increases in a fourth step 288. As a consequence, the current base station BS2 reports information on the new actual buffer fullness to other base stations BS1 and BS3. Also, the other base stations BS1 and BS3 may report information on actual fullnesses of their respective transmit buffers to the current base station BS2 in the fifth step 290.

In a sixth step 292, all involved base stations BS1, BS2, BS3 (which preferably serve the same mobile communication cell) determine a resource allocation based on the information on the actual buffer fullnesses transferred in the fifth step 290.

In a seventh step 294 the involved base stations BS1, BS2 and BS3 transmit data to mobile communications devices which are connected to the respective base stations using the resource allocation determined in the sixth step 292.

In other words, the resource allocation is performed based on the actual buffer fullnesses of the base stations.

However, it should be noted that resource allocation may be performed in a centralized way. For example, involved base stations BS1, BS2 and BS3 may report their respective information on the actual buffer fullness to a centralized resource allocator. The centralized resource allocator may then determine resource allocations for the involved base stations BS1, BS2 and BS3 and may preferably transmit information on the resource allocation to the base stations BS1, BS2 and BS3. The centralized resource allocator may further preferably allocate the resources such that the involved base stations BS1, BS2 and.BS3 do not interfere. For example, the centralized resource allocator may allocate orthogonal resources (e.g. orthogonal OFDM carriers, orthogonal OFDM subbands, orthogonal OFDM slots, orthogonal frequency slots and/or orthogonal time slots) to different base stations.

Furthermore, it should be noted that the base stations may perform a second step of a resource allocation which may be considered to be an intra-sector allocation. While resources are allocated between different base stations in the first step, the resources allocated to a specific base station may be assigned to the individual mobile communications devices connected to the specific base station in the second step of the resource allocation. This resource allocation to the individual mobile communication devices connected to the specific base stations may take into consideration the amount of data to be sent to the individual base stations, so that more resources are allocated to individual mobile communications devices to which more data are to be transmitted when compared to mobile communications devices to which less data are to be transmitted. Furthermore, characteristics of a channels between the specific base station and the mobile communications devices connected to the specific base station may be considered in the second resource allocation step.

In the following, an overview of the inventive resource scheduling concept will be given.

The present invention creates an extension for adaptive transmission applying a multi-user scheduling algorithm to a cellular environment. We assume three base stations with 120 degree sector antennas per cell, and inter-sector scheduling performed among these three base-stations (the inter-sector scheduling group). The inter and intra-sector scheduling is divided into two separate steps that are performed independently. Since the exchange of short term channel knowledge between base stations (in the following designated as "BSs") of one sector may be difficult to realize in practice, inter-sector scheduling does not rely on short term channel knowledge. For the inter-sector scheduling, the present invention proposes a low-complexity distributed algorithm were only the total amount of buffered data needs to be exchanged between the base stations in each group. For the intra-sector scheduling, any scheduling algorithm suitable for adaptive transmission may be employed, e.g. max SINR scheduling, i.e. the user with the highest SINR wins the slot, or proportional fair (PRF) scheduling.

The underlying idea of the inventive inter-sector scheduling algorithm is to group interfering sectors (e.g. base stations which can be received with at least a predetermined signal strength in the same region), and to perform inter-sector scheduling within this group. The inter-sector scheduler hands out frequency slots to the sectors (e.g. to the base stations receivable in the same region), in proportion to their total amount of buffered data (the sum of the packet-queue lengths for the connected users). Orthogonality in the frequency-domain is thereby obtained within the group of interfering sectors. Once the frequency-slots have been distributed, opportunistic scheduling is applied at each base station separately. That is, the scheduling is a two-step process where inter-sector scheduling (spectrum allocation) is performed prior to the intra-sector scheduling. Different opportunistic algorithms can be used for the intra-sector scheduler and, in the simulation results presented, the Proportional Fair algorithm was chosen as an example.

The inventive inter-sector scheduler may be viewed as a dynamic resource allocation scheme, in the way that resources are allocated to BSs proportional to their traffic load. By appropriate resource allocation of the inter-cell scheduler, inter-sector interference is mitigated. In the most general way, resources may be distributed in frequency, time and space. If resource allocation in frequency is considered, the inter-sector scheduler becomes a dynamic frequency reuse scheme. Unlike in a static frequency reuse scheme where a certain base station (designated in the following as 'BS') is allocated a fixed subband of the entire available frequency resources, the subbands are assigned proportional to the traffic load of a certain BS. By using OFDM subbands, data transfer capacity may be flexibly assigned by allocating subcarriers. As a measure for the traffic load the present invention uses the total amount of buffered data per BS (i.e. sector).

The inventive concept brings along a large number of advantages when compared to conventional solutions, which will be described in the following section.

By dividing the available bandwidth into subbands with bandwidth being proportional to the accumulated buffer size, the occurrence of empty slots is reduced, without a major increase in complexity. As a result, the system utilizes the available resources more efficiently, since, if a BS has temporarily no data to transmit, resources are shifted to an adjacent BS, providing a statistical multiplexing gain. Hence, the proposed two-step scheduler achieves a more efficient utilization of the available bandwidth with respect to a fixed frequency reuse scheme.

It is important to note, that the proposed inter-sector scheduler is effective for short term variations (packet switched services) as well as long term variations (different number of active users per BS). In the latter case, the number of active users will also be reflected in the total buffer size per BS. In the most extreme case, where all users of one sector may be connected to one BS, all resources would be shifted to that BS, since all other BSs have empty buffers. This would directly translate in a three-fold capacity increase per sector compared to a static frequency reuse scheme. An alternative solution would be to shift some users to adjacent BS. This however, would also result in lower sector capacity, since then the users would no longer be connected to the BS with the highest SINR. Therefore, the choice of the buffer size was found to be an appropriate indicator for the required bandwidth of a particular BS.

On the other hand, performing inter and intra-sector scheduling jointly is superior from a performance point of view. However, such a joint scheduler essentially requires exchange of short term channel knowledge, and possibly, a central control unit (e.g. a radio network controller (RNC) in third generation (3G) systems). The exchange of short term channel knowledge is sensitive to delays, and could therefore be difficult to realize by an e.g. all IP network. With the proposed two-step algorithm, no short term channel knowledge is exchanged between BS. Moreover, the deployment cost of the wireless network may be significantly reduced using the inventive solution, since the central control unit may be mitigated.

In the following, further details of the present invention will be described.

First, the concept of time and frequency-slotted coded OFDM will be explained.

The downlink for the system assumed in this report is based on a 5 MHz OFDM modem with 256 sub-carriers and a main-carrier frequency of 2 GHz. The resulting sub-carrier spacing is approximately 19.5 kHz and, including a cyclic-prefix of 5.2 $\mu$s, the total OFDM symbol time is 56.4 $\mu$s. Scheduling slots are formed by grouping $M = 16$ neighboring sub-carriers for $N = 16$ consecutive OFDM symbols as illustrated in Fig. 1. Hence, one scheduling slot equals 312.5 kHz x 0.902 ms and contains $MN = 256$ modulation symbols.

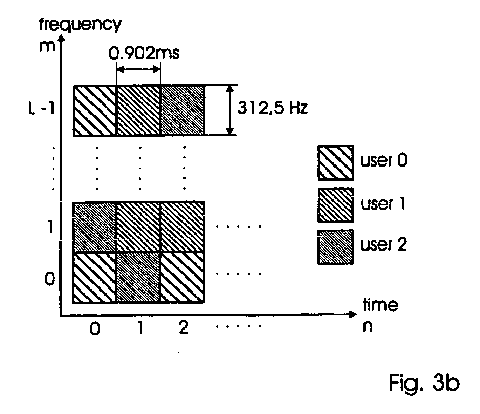

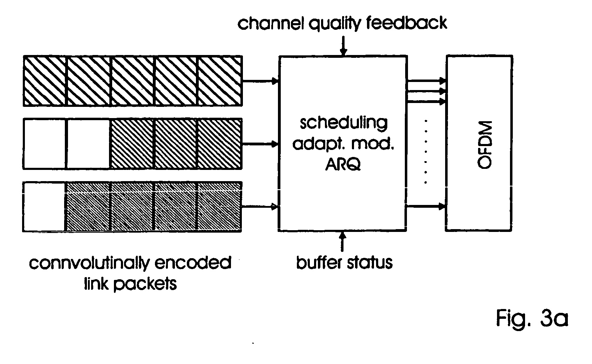

Fig. 3a shows a block schematic diagram of an inventive resource scheduler according to a fourth embodiment of the present invention. Fig. 3b further shows a graphical representation of OFDM slots scheduled by the inventive resource scheduler according to the fourth embodiment of the present invention. The inventive resource scheduler of Fig. 3a and the OFDM slots shown in Fig. 3b represent resource scheduling for time and frequency-slotted OFDM. A scheduler at the base station assigns slots to users based on their downlink channel qualities, transmission histories and current buffer statuses.

The retransmission entity on the physical layer is refereed to as a link packet. For each link packet, 184 bits (23 bytes) are convolutionally encoded by a rate 3/4 punctured code with a memory of eight bits [7] and interleaved by a block interleaver of size 16x16. To force the encoder back into its zero state, eight tail zeros are added and the resulting link packet hence equals 256 coded bits. That is, the size of a link packet matches the size of the scheduling slots.

For low mobility users and typical wireless channels, the coherence time and coherence bandwidth normally exceed the slot size. We therefore assume the same modulation for all symbols within a slot. This idea has earlier been proposed, e.g., in [3] and [8]. Using modulation alternatives with $\mu = 0, 1, 2, ..., 8$ bits per symbol, we now have a system that supports $\mu$ link packets per slot. Since link packets are of constant size, a retransmission can be scheduled in any slot where $\mu > 0$, i.e., the sender does not have to await a scheduling slot with the same preferable modulation to issue a retransmission. This is in contrast to the scheme in [3] and [8] where variable size link packets are assumed and one link packet per slot is transmitted.

Small differences in the SINR will, however, exist between symbols in the same slot and we therefore use the worst SINR within the slot when selecting the modulation to use. Hence, an SINR margin is implicitly assumed. Based on predictions for the worst SINR in each slot, the mobile terminals report back the preferable modulation to use choosing from the predefined alternatives shown in the following table, which is also referenced as table 1:

| Modulation, # link packets per slot | $E_s/N_0$ in dB |
|---|---|
| no transmission, $\mu = 0$ | $-\infty < \gamma < 2.2$ |

(continued)

| Modulation, # link packets per slot | $E_s/N_0$ in dB |
|---|---|
| BPSK, $\mu = 1$ | $2.2 \leq \gamma < 5.2$ |
| QPSK, $\mu = 2$ | $5.2 \leq \gamma < 9.1$ |
| 8-QAM, $\mu = 3$ | $9.1 \leq \gamma < 11.3$ |
| 16-QAM, $\mu = 4$ | $11.3 \leq \gamma < 14.4$ |
| cross 32-QAM, $\mu = 5$ | $14.4 \leq \gamma < 16.6$ |
| 64-QAM, $\mu = 6$ | $16.6 \leq \gamma < 19.5$ |
| cross 128-QAM, $\mu = 7$ | $19.5 \leq \gamma < 22.5$ |
| 256-QAM, $\mu = 8$ | $22.5 \leq \gamma < \infty$ |

The above table (table 1) constitutes a Lookup-table for a link packet error rate ($PER_{link}$) of $PER_{link} \leq 10^{-2}$ on an AWGN channel. In other words, the above lookup table defines which modulation type to use for a given signal -to-noise ratio Es/NO.

[0116]    The thresholds in the above table (table 1) are obtained from computer simulations of the link packet error rate on an AWGN channel.

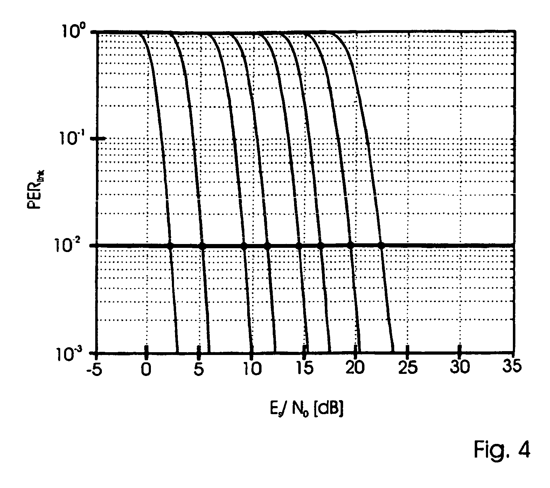

Fig. 4 shows a graphic representation of link packet error rates for different modulation types on an AWGN channel. Fig. 4 shows link packet error rates ($PER_{link}$) for BPSK, QPSK, ..., 256-QAM on an AWGN channel (wherein the modulation types are the same as described in table 1). The simulation results assume a perfectly time and frequency-synchronized receiver employing max-log-MAP demodulating and soft decision Viterbi-decoding.

From the results shown in Fig. 4, we chose the most spectrally efficient modulation that provides a link-packet error rate below $10^{-2}$. For retransmission of erroneous link packets, we use selective repeat ARQ (confer [9], pages 285 to 289, and [10], pages 223 to 228) with eight-bit sequence numbers. It should be noted her, that the overhead associated with the sequence number needs further attention.

In the following, the inventive inter-sector scheduling will be outlined in detail.

For the cellular system we assume that three corner positioned base stations with 120 degree sector antennas illuminate each cell. These three sectors together form a time synchronous inter-sector scheduling group. An inventive inter-sector scheduler distributes resources (time-frequency slots) to the sectors within the group, and mutual interference is avoided by ensuring that one base station only transmits in a given time-frequency slot.

In abstract, the present invention teaches to let the inter-sector scheduler distribute slots in proportion to the amount of buffered data at the base stations. The rational for using this approach for delay sensitive services is that growing buffers indicate a need for more resources (time-frequency slots) to meet packet delay deadlines. As outlined above, this is true for short term variations, such as varying inter-arrival times of packets, as well as long term variations, such as different average data rates or different number of active users.

After the inter-sector scheduling has been completed, the intra-sector scheduler assigns slots to the active users using, e.g., the Proportional Fair or Exponential Rule algorithms.

In general, we consider a system with L frequency slots and S sectors per cell, and we let $D_n[s]$ be the total number of buffered link packets for the users in sector s at time n. We assume that $D_n[s]$ is made available at all base stations in the inter-sector scheduling group.

Each distributed inter-sector scheduler now computes the number of slots for each sector as

$$l_n[s] = \begin{cases} g_n[s], s = n \% S \\ f_n[s], \text{otherwise} \end{cases}, \quad s = 0, 1, \ldots, S-1 \quad (1)$$

where '%' denotes the modulo operator and

$$f_n[s] = \left\lfloor \frac{LD_n[s]}{\sum_k D_n[k]} \right\rfloor, \tag{2}$$

$$g_n[s] = L - \sum_{s' \neq s} f_n[s']. \tag{3}$$

After $l_n[s]$ has been computed, the inter-sector scheduler must determine which slots to use at sector s. At this point it is clear that multiple alternatives exist and we chose to assign slots in a Round Robin fashion, as illustrated in Figure 5.

Fig. 5 shows a block diagram of an inventive Round Robin for assigning slots to sectors. The Round Robin assigns slots to sectors according to $l_n[s]$, wherein $l_n[s]$ is calculated according to equation (1). The required initial conditions are m=0, s=0, and $k_n[s]=0$ $\forall$s.

To this end, slots are blockwise interleaved, such that subsequent slots associated to the same BS are in average spaced S slots apart. This slot assignment has the advantage that the frequency diversity of the entire band is utilized. On the other hand, assigning contiguous chunks of slots to BSs is more robust with respect to synchronization offsets between BSs.

In the following, intra-sector scheduling is described in more detail.

Since the channel states for all L slots are preferably available for all users in a given sector, a "vector" scheduler that jointly considers all users for all frequency slots at time n could be implemented. However, in the present invention we settle for a "scalar" algorithm that forms its decisions independently between slots and sequentially in frequency. That is, the scheduler first assigns a user to slot m = 0, thereafter to slot m = 1, and so on.

Given the sequential approach, it is convenient to drop the time and frequency indexes and instead identify slots by a sequence index, q, as

$$\begin{aligned} m &= 0, 1, \ldots, L-1 \\ q &= nL+m, \\ n &= 0, 1, \ldots \end{aligned} \tag{4}$$

In (4), all L slots are assumed available. Naturally, when inter-sector scheduling is used, only the slots assigned to each sector should be included.

Using Table 1 (the lookup-table for a link packet error rate of $PER_{link} \leq 10^{-2}$ on an AWGN channel), the kth mobile terminal reports back its predicted downlink channel quality for the qth slot as $\hat{\mu}_k[q]$.

For the intra-sector scheduler a proportional fair (PFR) was implemented. Another suitable intra-sector scheduler would be the exponential rule scheduler [11]. Denoting the $q^{th}$ slot scheduled for user $k$ by $\hat{k}[q]$, the PRF scheduler forms its decision according to:

$$\hat{k}[q] = \arg \max_{k \in \Omega_k[q]} \frac{\hat{\mu}_k[q]}{\overline{\mu}_k[q]}, q = 0,1,\ldots$$

where $\overline{\mu}_k[q]$ accounts for the average rate of user k, which may be obtained by a moving average operation. Furthermore, $\Omega_k[q]$ denotes the set of users which have data to transmit.

In the following, an evaluation of system performance will be described.

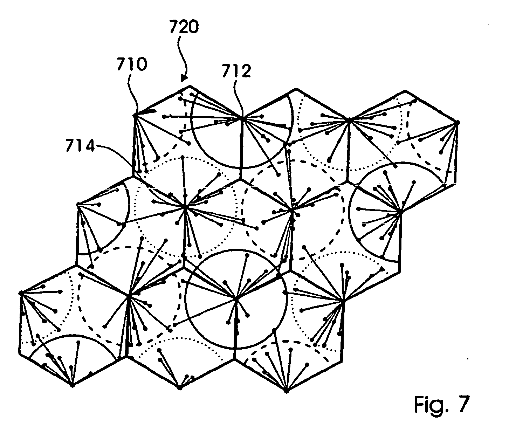

We use computer simulations to evaluate the performance for the proposed combination of intra and intersector scheduling in a cellular environment of nine cells, as illustrated in Fig. 7.

Fig. 7 shows a graphic representation of a user distribution randomly distributed within mobile communication cells for simulation. In other words, Fig. 7 is a simulator snapshot. Users are randomly distributed within each cell, uniformly per area unit. Furthermore, users are connected to the base station that yields the highest SINR. Solid, dashed and dotted lines are used to illustrate the antenna patterns for sector-id s=0, s=1, and s=2, respectively.

To avoid boundary effects for cells located at the outer parts of the service area, a wraparound environment where all cells have neighbours in each direction is implemented.

It should be noted here, that a communication cell is illustrated in Fig. 7 as a hexagonal comb. In Fig. 7, base stations (e.g. base stations 710, 712, 714) (or transmitters/receivers) are located at corners of the hexagonal cells, e.g. cell 720. Each base station establishes links with a plurality of mobile devices, wherein the links are shown as lines starting at the base stations. Each of the base stations serves a sector of about 120 degrees. As shown in Fig 7, each cell (e.g. cell 720) is served by three base stations (e.g. base stations 710, 712, 714).

In other words, a sector is a spatial region which is served by a base station. Further, a cell may be served by more than one base stations, so that a cell may comprise a plurality of overlapping sectors.

Although base stations are preferably located at the edges or at the boundary of a cell, base stations may also be located within the cells. It should further be noted, that the geometry of the sectors and cells may vary. Also, the number of base stations serving the cells may vary.

Further, the base stations may use resources from a set of available total transmit/receive resources. The total available transmit/receive resources may for example comprise frequency resources (e.g. frequency ranges), time resources (e.g. time slots) or code resources (e.g. CDMA codes).

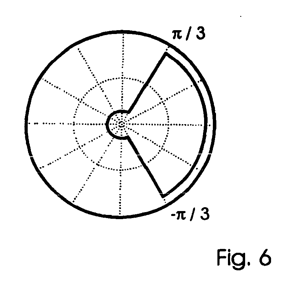

Fig. 6 shows a graphic representation of an idealized antenna pattern. The antenna pattern comprises a front-to-back lobe ratio of 25 dB, as it is assumed for the base stations.

In other words, idealized 120 degree antennas ($S$ = 3 sectors per cell) with a 25 dB front-to-back lobe ratio as illustrated in Fig. 6 are used for the bases-stations. Omnidirectional antennas are assumed for the mobile terminals.

The downlink radio channels are modelled as frequency-selective Rayleigh-fading with a power delay profile according to the "Vehicular Reference Environment A", and Clarke's Doppler spectrum is assumed for the tap correlation. A distance dependent path-loss exponent of $\alpha$ = -4 and log-normal shadowing with $\sigma_s$ = 5 dB is also assumed. We focus on a low mobility scenario and assume that all users move at $v$ = 1 m/s.

We study two different scenarios for the data traffic. In scenario I, packets arrive at the base station according to a Poisson process, i.e., packet inter-arrival times are assumed exponentially distributed with mean value $\overline{T}_P$. This scenario corresponds to applications of a relatively constant data rate, such as streaming video, and is referenced in brief as 'Poisson data traffic'.

However, many applications, such as web-browsing, generate data bursts with relatively long idle periods in between. In scenario II, we therefore assume that packet inter-arrival times are exponentially distributed with different mean values, $\overline{T}_b$ or $\overline{T}_i$, depending on if the process is in its burst or idle-state. That is, the time between packet bursts is modelled as exponentially distributed with mean value $\overline{T}_i$, and the time between packets within a burst is modelled as exponentially distributed with mean value $\overline{T}_b$, where $\overline{T}_b << \overline{T}_i$. For both scenarios we assume a constant packet size of 1495 bytes (65 link packets), and for simplicity, we also assume a constant burst size of 50 packets.

The following table, which will also be referenced as table 2, summarizes the parameters used for the data traffic.

| Scenario | User bitrate | Inter-arrival times | Packet size | Burst length |
|---|---|---|---|---|
| I | $\overline{R}_b$=200 kbit/s | $\overline{T}_P \approx$ 59.8 ms | 1495 bytes | NA |
| II | $\overline{R}_b$=40 kbit/s | $\overline{T}_b \approx$ 122μs, $\overline{T}_i \approx$ 14.94 s | 1495 bytes | 50 packets |

We assume 20 and 100 users in each cell, uniformly distributed per area unit, in scenario I and II respectively. Hence, if all users are admitted to the system, the average load per cell in both scenarios equals 4 Mbit/s. However, since an outage policy is included in the simulations (see below), the actual load will be slightly lower.

For the interfering base-stations, we include the distance dependent path-loss and shadowing but exclude the frequency-selective Rayleigh-fading. We assume that all base stations use a transmit power that result in an expected $E_b/N_0$ of 15 dB at the cell center in a single user scenario (zero interference), where the expectation is over both the log-normal shadowing and the Rayleigh-fading.

The fast fading for the signal of interest is a process that can be accurately predicted for low mobility users [2]. The inter-cell interference power on the other hand depends on the transmission activity for each interfering base station and predicting its short term value at the mobile terminals is virtually impossible. Therefore, mobile terminals can use predictions of the signal energies but must rely on measurements for the interference-plus-noise powers when forming the predicted SINR. More precisely, in the simulations we form the predictions for the SINR as the ratio between the power spectral density for the interference plus noise at time n-1 (assumed perfectly known) and the signal energy at time n+2 (assumed perfectly known).

For simplicity, we assume that all base stations are time synchronized although this assumption really is needed only within each inter-sector scheduling group. Furthermore, propagation delays are assumed negligible within the service area and we model the inter-cell interference as an individual but constant increase in the AWGN power for each slot. Hence, depending on the transmission activity at the interfering base stations, different slots will have different AWGN power in the simulations.

The simulator evaluates the performance for snapshots of 20s and 100s duration respectively for scenarios I and II. The presented results are average values over 100 and 20 independently generated snapshots respectively for scenarios I and II, where we for each snapshot assume that

- users are randomly positioned, uniformly per area unit, within each cell;

- the user positions are fixed but the Rayleigh-fading is still updated;

- the log-normal shadowing from each base station to each mobile terminal is independently generated, and is kept constant during the snapshot;

- the packet data sequences are independently generated for different users;

- the frequency selective Rayleigh-fading is independently generated for different users; and

- the AWGN is independently generated for different users.

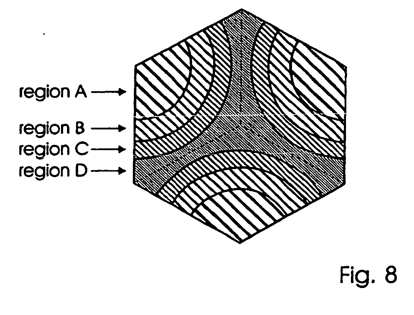

Fig. 8 shows a graphical representation of a division of a cell into regions that covers 25% each of the service area. In other words, each cell is divided into regions that cover 25% each of the service area, and we present the average performance for users located in the same region.

Indeed, performance is user-specific for each snapshot and we therefore chose to present average values for users located in the same region in Fig. 8. The four regions in Fig. 8 cover 25% each of the service area and hence have the same expected number of users.

To exclude users with unacceptably poor performance, we employ an outage policy requiring an average SINR of at least 10 dB. Some of these users may be covered by a robust fall-back method that employs a lower channel coding rate at the cost of a lower throughput.

In the following, simulation results for the inventive scheduling concept will be described.

With the system parameters described above, in total 16 slots are available for scheduling. However, to make a fair comparison between our proposal and a traditional scheme with a static frequency reuse, only the first 15 slots will be used ($L$ = 15). For the reference scheme, every third slot is assigned to each of the sectors in the cell. That is, slots are assigned and reused in the cellular environment according the following table, which describes a reuse pattern for the reference scheme, and which is also referenced as table 3.

| Slot number, s | Line type in Fig. 7 | Frequency slots, m |
|---|---|---|
| 0 | Solid | 0,3,6,9,12 |
| 1 | Dashed | 1,4,7,10,13 |
| 2 | Dotted | 2,5,8,11,14 |

The same relation between the sector number, s, and the sector position depicted in Fig. 7 is assumed also for the scheme with inter-sector scheduling.

Indeed, Table 3 is the special case that results from using the inter-sector scheduling algorithm described above with reference to equations (1), (2) and (3), with $L$ = 15, $S$ = 3, and $l_n[0] = l_n[1] = l_n[2] = 5 \; \forall n$.

In the simulations, the packet delay is defined as the time spent between the buffer arrival at the base station to an error-free receipt at the mobile terminal. Hence, the presented results include additional time spent for retransmission of erroneous link packets. It should be noted, however, that processing delays are not included in the simulations.

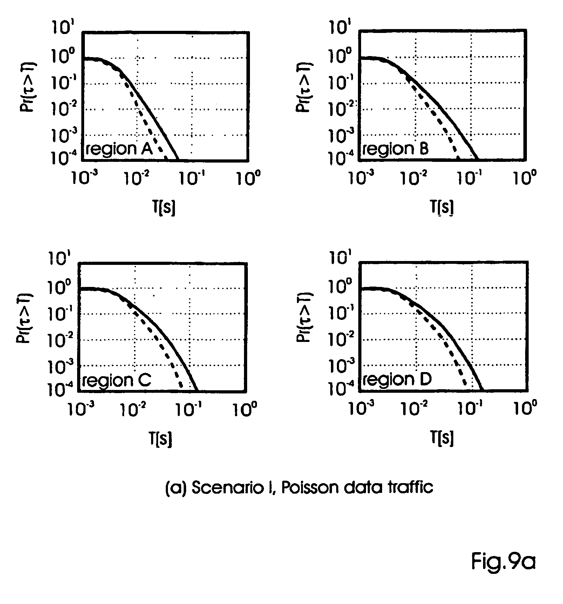

Fig. 9a shows a graphic representation of a probability for a packet delay $\tau$ exceeding a time T[s], for a mobile communication system comprising an inventive base station and for a conventional base station, for Poisson traffic. Dashed and solid lines show the performance for the proposed scheme and the reference scheme (conventional base station), respectively.

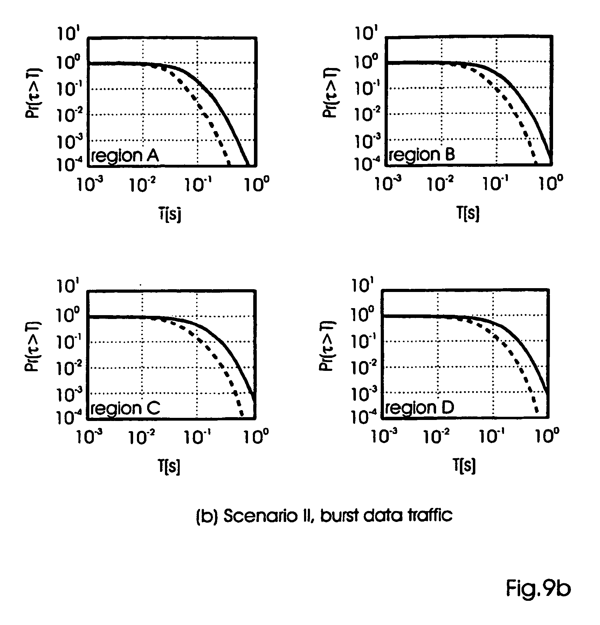

Fig. 9b shows a graphic representation of a probability for a packet delay $\tau$ exceeding T[s], for a mobile communication system comprising an inventive base station and for a conventional base station, for burst data traffic. The presentation is analog with Fig. 9a.

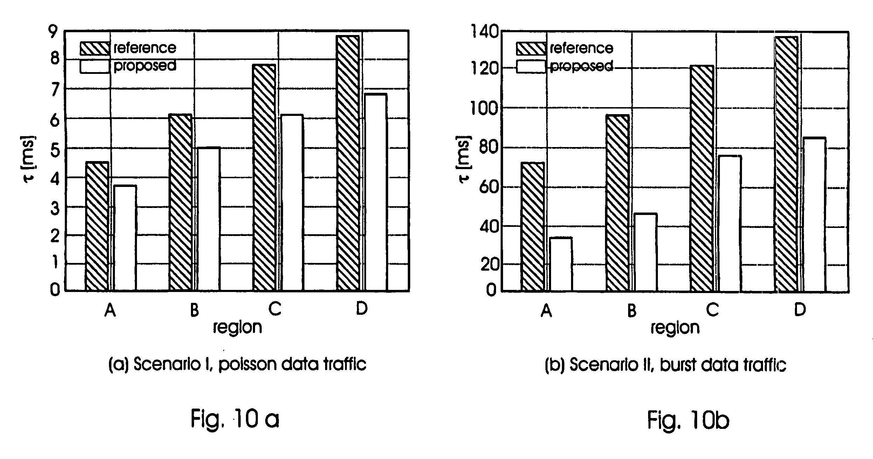

Fig. 10a shows a graphic representation of average packet delays for a mobile communication system comprising an inventive base station and for a conventional mobile communication system, for Poisson traffic. Average packet delays for the proposed scheme are illustrated by white bars, while the average packet delays for the reference scheme (a conventional mobile communications system) is illustrated by black bars.

Fig. 10b shows the same information as Fig. 10a, for burst data traffic.

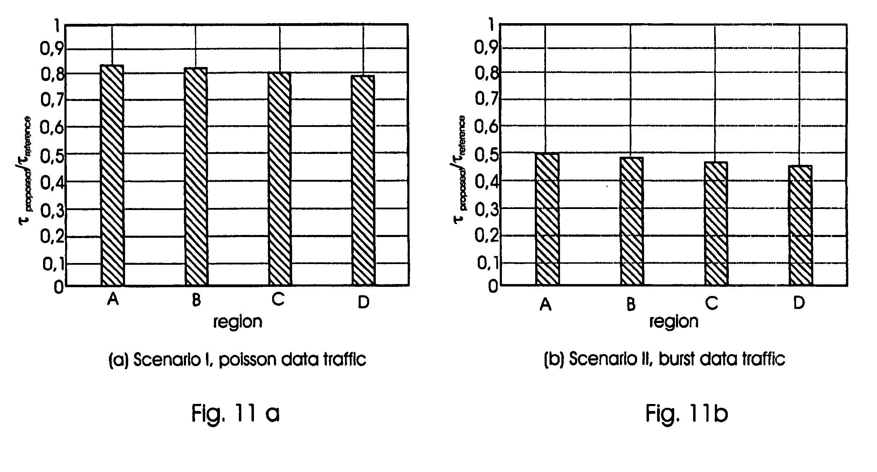

Fig. 11a shows a graphic representation of a ratio between average packet delays for a mobile communication system comprising the inventive base station and a conventional mobile communication system, for Poisson data traffic.

Fig. 11b shows the same information as Fig 11a, for burst data traffic.

From figures 9a, 9b, 10a, 10b, 11a and 11b, we see the clear advantage of using the proposed inter-sector scheduler compared to the reference scheme with a static reuse, and we conclude that a delay reduction of approximately 20% to 50% can be achieved, depending on the traffic model used. As should be expected, the gain of inter-sector scheduling is more significant for burst data traffic.

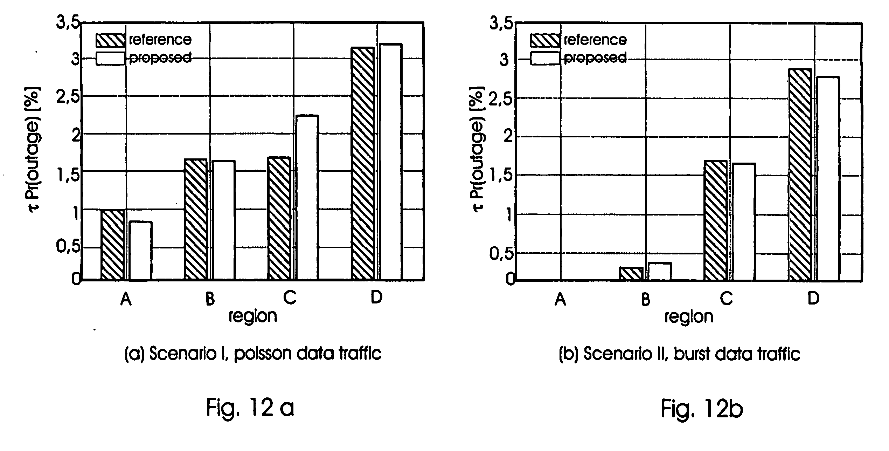

Fig. 12a shows a graphic representation of an outage probability for a mobile communication system comprising the inventive base station and the conventional mobile communication system, for Poisson data traffic.

Fig. 12b gives the same information for burst data traffic. Figures 12a and 12b show the outage probability for the users in each group. As should be expected, the outage probability increases with the distance from the base station (decreasing SINR).

To summarize the above, the present invention creates an extension for adaptive transmission applying a multi-user scheduling algorithm to a cellular environment. Since one user only is scheduled in each slot, the intra-cell interference is zero by construction. To further reduce interference, scheduling can be done also among neighboring base stations in the cellular environment. Depending on the information that can be exchanged between base stations, different inter-cell schedulers can be designed. In the present invention we show that a particularly advantageous solution can be achieved by exchanging the amount of buffered data at each base station within a small group of base stations. More precisely, the sectors that illuminate each cell in the system form inter-sector scheduling groups. Hence, we divide the scheduling into two separate operations, inter and intra-sector scheduling, that are performed separately. In this case, it is advantageous to move free resources to nearby base stations that have data to transmit. A similar approach was taken in [1] but in contrast to the results in [1] that show increased packet delays, we conclude that our scheme can significantly reduce packet delays.

In other words, the present invention defines an extension of a multi-user scheduling algorithm to a cellular environment for adaptive transmission. A time-frequency slotted multi-user OFDM system is considered where groups of subcarriers and OFDM symbols are grouped into slots. The purpose of adaptive transmission is to allocate slots to users which have favourable channel conditions at that particular slot.

In a further preferred embodiment, the inventive inter-sector scheduling is not only performed in the downlink, i.e., in the communication from the base station to the mobile, but is also performed in the uplink from the mobile to the base station. In this embodiment, the buffer fullness situations of several mobiles competing for transmission resources is used for allocating resources to the mobiles. Preferably, however, the actual resource allocation is performed via the base station serving the mobiles. Although the resources used by the mobiles are determined by the buffer fullnesses of the mobiles, the base station still informs the mobiles on the amount of resources such as the number of channels which the different mobiles can use. Thus, the mobiles do not take the resources completely by themselves but still ask the base station, receive an answer of the base station as to the allocated number of channels and, then, occupy the number of channels advertised in the base station answer.

Furthermore it should be noted that depending on certain implementation requirements of the inventive methods, the inventive methods can be implemented in hardware or in software. The implementation can be performed using a digital storage medium, for example a disk, a DVD, a CD, a one-time programmed memory chip or a re-programmable memory chip having electronically readable control signals stored thereon, which cooperate with a programmable computer system such that the inventive methods are performed. Generally, the present invention is, therefore, a computer program product with a program code stored on a machine readable carrier, the program code being operative for performing the inventive methods when the computer program product runs on a computer. In other words, the inventive methods are, therefore, a computer program having a program code for performing at least one of the inventive methods when the computer program runs on a computer.

The inventive inter-sector scheduler, the inventive methods and the inventive computer program allow a particularly efficient resource usage in a mobile communications system, and may therefore help to create systems with a higher data throughput and/or lower costs.

**Claims**

1. A scheduler (100; 130) for controlling a transmitter/receiver among at least a first transmitter/receiver and a second transmitter/receiver, the first transmitter/receiver and the second transmitter/receiver being adapted to transmit or receive using available total transmit/receive resources, the first transmitter/receiver using first transmission resources and the second transmitter/receiver using second transmission resources, the first transmitter/receiver having a first transmit buffer and the second transmitter/receiver having a second transmit buffer, the scheduler comprising:

   a receiver (110; 140) for receiving information (112, 114; 142, 144) on a load situation of the first transmitter/ receiver and the second transmitter/receiver, the load situation including information on an actual buffer fullness of the first and second buffer at a certain time;
   a resource allocator (120; 150) for allocating a first portion of the total resources to the first transmitter/receiver, the first portion being different from a second portion allocated to the second transmitter/receiver, based on the information (112, 114; 142, 144) on the load situation, the resource allocator (120; 150) being adapted to apply an allocation rule (160, 162, 164), the allocation rule (160, 162, 164) resulting in more resources (170) allocated to a transmitter/receiver having a higher load compared to transmitter/receiver having a lower load,

   wherein the first or second transmitter/receiver is a base station or a mobile device;
   wherein the first transmitter/receiver is capable of establishing and maintaining links with a plurality of devices,
   wherein the second transmitter/receiver is capable of establishing and maintaining links with a plurality of devices,
   wherein the buffer fullness of the first transmitter/receiver is calculated over a plurality of transmission links maintained by the first transmitter/receiver, and
   wherein the buffer fullness of the second transmitter /receiver is calculated over a plurality of transmission links maintained by the second transmitter/receiver.

2. The apparatus of claim 1, wherein the first transmitter/receiver and the second transmitter/receiver are arranged such that they transmit into or receive from the same spatial region.

3. The apparatus of claims 1 or 2, wherein the first transmitter/receiver and the second transmitter/receiver are arranged in the same transmission cell, wherein the transmission cell comprises a plurality of sectors, wherein each sector has associated therewith a transmitter/receiver, and wherein the resource allocator (120; 150) is operating to allocate resources among the sectors.

4. The apparatus (100, 130) of one of claims 1 to 3, in which the receiver (110; 140) is operating to receive, as the load situation, a total buffer fullness information (146) depending on the sum of all buffer fullnesses of transmitter/ receivers in a communication cell, and an actual buffer fullness (112; 142) of a certain transmitter/receiver; and in which the resource allocator (120; 150) is operating to allocate resources to the certain transmitter/receiver depending on a ratio (166) of the actual buffer fullness (142) and the total buffer fullness (146).

5. The apparatus (100, 130) of one of claims 1 to 4, wherein the resources (122; 170) allocated to the transmitter/ receiver comprise an OFDM sub-carrier, the OFDM sub-carrier being a member of a set (154) of OFDM sub-carriers being available for usage for a plurality of base stations serving the same communication cell,
   an OFDM sub-band, the OFDM sub-band combining a plurality of OFDM sub-carriers, the OFDM sub-band being a member of a set (154) of OFDM sub-bands available for usage by a plurality of base stations serving the same communication cell,
   an OFDM slot, the OFDM slot comprising a plurality of sub-carriers in a plurality of subsequent OFDM symbols, the OFDM slot being a member of a set of OFDM slots available for usage by a plurality of base stations serving the same communication cell,
   a frequency interval, the frequency interval being part of a total available frequency allocation (154) available for usage by a plurality of base stations serving the same communication cell,
   a time slot from a plurality of available time slots available for usage by a plurality of base stations serving the same communication cell; and/or
   a spatial resource, the spatial resource defining a region on which a base station can concentrate service, from a plurality of spatial resources available for usage by a base station serving the communication cell.

6. The apparatus of one of claims 1 to 5, further comprising a synchronization unit for time synchronizing the operation of the inter-sector scheduler (100; 130) with the operation of at least another inter-sector scheduler.

7. The apparatus of one of claims 1 to 6, wherein the allocation rule is adapted such that the resources allocated by the resource allocator (120; 150) are not in conflict with resources allocated by another inter-sector scheduler.

8. The apparatus of one of claims 1 to 7, wherein the allocation rule is adapted to avoid interference between adjacent base stations serving the same communication cell.

9. The apparatus of one of claims 1 to 8, wherein the resource allocator (120; 150) is operating to allocate resources to the certain transmitter/receiver such that a data transfer capacity of the resources allocated to the certain transmitter/receiver is, except for deviations due to resource quantization effects, proportional to the ratio (166) of the actual buffer fullness (142) of the certain transmitter/receiver and the total buffer fullness information (146).

10. The apparatus of one of claims 1 to 9, wherein the resources are quantized in resource units (154), wherein the resource allocator (150) is operating to determine, in a first time interval, an number (168) of resources for allocation to the transmitter/receiver using a first allocation rule, and to determine, in a second time interval, the number (168) of resources for allocation to the transmitter/receiver using a second allocation rule,
the first allocation rule and the second allocation rule being adapted such that a first rounding error due to resource quantization introduced by the first allocation rule has an opposite sign when compared to a second rounding error introduced by the second allocation rule.

11. The apparatus of claim 10, wherein the first allocation rule indicates rounding the product of a total number (152) of available resource units and the ratio (166) of the actual buffer fullness of the transmitter/receiver and the total buffer fullness (146) to an integer value, to obtain the number (168) of resource units for allocation to the transmitter/receiver, and wherein the second allocation rule indicates obtaining the number (168) of resource units for allocation to the transmitter/receiver as a rest of resource units (154) not allocated to other transmitter/receivers, the rest being calculated as a difference between a total number (154) of available resource units (152) and at least one rounded value describing an number of resource units allocated to another transmitter/receiver.

12. The apparatus of one of claims 1 to 11, wherein the resource allocator (120; 150) is adapted to allocate resources (122, 124; 170, 182) to at least the first transmitter/receiver and the second transmitter/receiver based on the information (112, 114; 142, 144, 146) on the load situation, wherein the inter-sector scheduler (100; 130) further comprises a resource allocation distributor (184) for distributing an information (170, 182) on the resource allocation to at least the first transmitter/receiver and the second transmitter/receiver.

13. The apparatus of one of claims 1 to 12, wherein the resources are time slots and/or frequency slots, and wherein the resource allocator (120; 150) is adapted to determine, for at least two transmitter/receivers, the number (168, 178) of slots to be allocated to the transmitter/receivers, and wherein the resource allocator (120; 150) is further adapted to alternately allocate subsequent adjacent slots to the at least two transmitter/receivers as long as less slots than the number (168; 178) of slots to be allocated have been allocated to at least one out of the at least two transmitter/receivers.

14. The apparatus of one of claims 1 to 13, wherein the resources are time slots and/or frequency slots, and wherein the resource allocator (120; 150) is adapted to allocate subsequent adjacent slots to the at least two transmitter/receivers using a Round Robin procedure.

15. The apparatus of one of claims 1 to 12, wherein the resources are time slots and/or frequency slots, and wherein the resource allocator (120; 150) is adapted to determine, for the at least two transmitter/receivers, respective numbers (168, 178) of slots to be allocated to the transmitter/receivers, and wherein the resource allocator (120; 150) is further adapted to allocate to the first transmitter/receiver a first contiguous block of adjacent slots, and to allocate to the second transmitter/receiver a second contiguous block of adjacent slots.

16. The apparatus of one of claims 1 to 15, wherein the resource allocator (120; 150) is further adapted to distribute the resources allocated to the transmitter/receivers to a plurality of data connections with the mobile communications devices maintained by the transmitter/receiver.

17. The apparatus of one of claims 1 to 16, wherein the scheduler is an inter-sector-scheduler.

18. Transmitter/receiver (200) for a mobile communications network having a first transmitter/receiver and a second transmitter/receiver adapted to transmit or to receive using available total transmit/receive resources, the transmitter/receiver comprising,

a transmit buffer (210) for buffering data (212) to be transmitted from the base station (200) to a mobile communications device or vice versa;

a transmit buffer fullness determinator (220) for determining an information on a load situation of the transmitter/ receiver (200) including an information (222) on an actual fullness of the transmit buffer (210);

a scheduler including a receiver (228) for receiving a load situation of at least one other transmitter/receiver, the load situation including information (226) on an actual buffer fullness of a transmit buffer of the at least one other transmitter/receiver, and a resource allocator (224) for allocating a first portion of the total resources to the first transmitter/receiver (200), the first portion being different from a second portion of the total resources allocated to the second transmitter/receiver, based on the information (222) on the load situation of the first transmitter/receiver and the information (226) on the load situation of the at least one other transmitter/receiver, the resource allocator (224) being adapted to apply an allocation rule, the allocation rule resulting in more resources allocated to a transmitter/receiver having a higher load than a transmitter/receiver having a lower load;

wherein the first transmitter/receiver is capable of establishing and maintaining links with a plurality of devices,

wherein the second transmitter/receiver is capable of establishing and maintaining links with a plurality of devices,

wherein the buffer fullness of the first transmitter/receiver is calculated over a plurality of transmission links maintained by the first transmitter/receiver, and

wherein the buffer fullness of the second transmitter/receiver is calculated over a plurality of transmission links maintained by the second transmitter/receiver.

**19.** The apparatus of claim 18, wherein the transmitter/receiver (200) further comprises a sender (250) for transferring data (254) to be transmitted to a specific mobile communications device and contained in the transmit buffer (210) to another base station upon detecting that the specific mobile communications device is served by the other base station, and a buffer controller (260) for deleting the data (254) transferred to the other base station from the transmit buffer (210).

**20.** The apparatus of claim 19, wherein the buffer controller (260) is adapted to initiate a determination of the information (222) on the load situation of the transmitter/receiver (200) after deleting the data (254) transferred to the other base station from the transmit buffer (210).

**21.** The apparatus of one of claims 18 to 20, wherein the transmitter/receiver (200) further comprises a receiver (240) for receiving data to be transmitted to a particular mobile communications device from another transmitter/receiver, and a buffer controller (260) for adding the data (244) to be transmitted to the particular mobile device to the transmit buffer (210).

**22.** The apparatus of claim 21, wherein the buffer controller (260) is adapted to initiate a determination of the information (222) on the load situation of the base station (200) after adding the data (244) received from the other base station to the transmit buffer (210).

**23.** The apparatus of one of claims 18 to 22, wherein the scheduler is an inter-sector scheduler.

**24.** A method for controlling a transmitter/receiver among a first transmitter/receiver and a second transmitter/receiver, the first transmitter/receiver and the second transmitter/receiver being adapted to transmit or receive using available total transmit/receive resources, the first transmitter/receiver using first transmission resources and the second transmitter/receiver using second transmission resources, the first transmitter/receiver having a first transmit buffer and the second transmitter/receiver having a second transmit buffer, the method comprising:

receiving (110; 140) information (112, 114; 142, 144, 146) on a load situation of the first transmitter/receiver and the second transmitter/receiver, the load situation including information on actual buffer fullnesses of the first buffer and the second buffer at a certain time;

allocating (120; 150) a first portion of the total resources to the first transmitter/receiver, the first portion being different from a second portion of the total resources allocated to the second transmitter/receiver, based on the information (112, 114; 142, 144, 146) on the load situation by applying an allocation rule, the allocation rule resulting in more resources allocated to a transmitter/receiver having a higher load compared to a transmitter/receiver having a lower load,

wherein the first transmitter/receiver is capable of establishing and maintaining links with a plurality of devices,

wherein the second transmitter/receiver is capable of establishing and maintaining links with a plurality of devices,

wherein the buffer fullness of the first transmitter/receiver is calculated over a plurality of transmission links maintained by the first transmitter/receiver, and

wherein the buffer fullness of the second transmitter/receiver is calculated over a plurality of transmission links maintained by the second transmitter/receiver.

25. A method for operating a transmitter/receiver for a mobile communication network having a first transmitter/receiver and at least one other transmitter/receiver adapted to transmit or receive using available total transit/receive resources, the method comprising:

buffering (210) data to be transmitted from the base station to a mobile communication device or vice versa;

determining (220) an information on a load situation including information (222) on an actual fullness of a transmit buffer;

receiving (228) an information on a load situation of at least one other transmitter/receiver, the load situation including information (226) on an actual buffer fullness of a transmit buffer of the at least one other transmitter/receiver;

allocating (224) a first portion of the total resources to the first transmitter/receiver, the first portion being different from a second portion of the total resources allocated to the second transmitter/receiver, based on the information (222) on the load situation of the first transmitter/receiver and on the load situation (226) of the at least one other transmitter/receiver by applying an allocation rule, the allocation rule resulting in more resources allocated to a transmitter/receiver having a higher load compared to a transmitter/receiver having a lower load,

wherein the first transmitter/receiver is capable of establishing and maintaining links with a plurality of devices,

wherein the at least one other transmitter/receiver is capable of establishing and maintaining links with a plurality of devices,

wherein the buffer fullness of the first transmitter/receiver is calculated over a plurality of transmission links maintained by the first transmitter/receiver, and

wherein the buffer fullness of the at least one other transmitter/receiver is calculated over a plurality of transmission links maintained by the second transmitter/receiver.

26. A computer program having a program code for performing the method in accordance with claims 24 or 25, when the computer program runs on a computer.


**Patentansprüche**

1. Ein Zeitplaner (100; 130) zum Steuern eines Senders/Empfängers unter zumindest einem ersten Sender/Empfänger und einem zweiten Sender/Empfänger, wobei der erste Sender/Empfänger und der zweite Sender/Empfänger angepasst sind, um unter Verwendung von verfügbaren Gesamtsende-/Empfangsressourcen zu senden oder zu empfangen, wobei der erste Sender/Empfänger erste Sendungsressourcen verwendet und der zweite Sender/Empfänger zweite Sendungsressourcen verwendet, wobei der erste Sender/Empfänger einen ersten Sendepuffer aufweist und der zweite Sender/Empfänger einen zweiten Sendepuffer aufweist, wobei der Zeitplaner folgende Merkmale aufweist:

einen Empfänger (110; 140) zum Empfangen von Informationen (112, 114; 142, 144) über eine Belastungssituation des ersten Senders/Empfängers und des zweiten Senders/Empfängers, wobei die Belastungssituation Informationen über eine tatsächliche Pufferfülle des ersten und zweiten Puffers zu einer bestimmten Zeit umfasst;

ein Ressourcenzuteiler (120; 150) zum Zuteilen eines ersten Abschnitts der Gesamtressourcen zu dem ersten Sender/Empfänger basierend auf den Informationen (112, 114; 142, 144) über die Belastungssituation, wobei sich der erste Abschnitt von einem zweiten Abschnitt unterscheidet, der zu dem zweiten Sender/Empfänger zugeteilt ist, wobei der Ressourcenzuteiler (120; 150) angepasst ist, um eine Zuteilungsregel (160, 162, 164) anzuwenden, wobei die Zuteilungsregel (160, 162, 164) darin resultiert, dass im Vergleich zu einem Sender/Empfänger, der eine niedrigere Belastung aufweist, mehr Ressourcen (170) zu einem Sender/Empfänger zugeteilt werden, der eine höhere Belastung aufweist,

wobei der erste oder zweite Sender/Empfänger eine Basisstation oder ein Mobilgerät ist;

wobei der erste Sender/Empfänger Verknüpfungen mit einer Mehrzahl von Geräten einrichten und aufrechterhalten kann,

wobei der zweite Sender/Empfänger Verknüpfungen mit einer Mehrzahl von Geräten einrichten und aufrechterhalten kann,
wobei die Pufferfülle des ersten Senders/Empfängers über eine Mehrzahl von Sendungsverknüpfungen berechnet ist, die durch den ersten Sender/Empfänger aufrechterhalten werden, und
wobei die Pufferfülle des zweiten Senders/Empfängers über eine Mehrzahl von Sendungsverknüpfungen berechnet ist, die durch den zweiten Sender/Empfänger aufrechterhalten werden.

2. Die Vorrichtung gemäß Anspruch 1, bei der der erste Sender/Empfänger und der zweite Sender/Empfänger derart angeordnet sind, dass dieselben in den gleichen räumlichen Bereich senden oder aus demselben empfangen.

3. Die Vorrichtung gemäß Anspruch 1 oder 2, bei der der erste Sender/Empfänger und der zweite Sender/Empfänger in der gleichen Sendungszelle angeordnet sind, wobei die Sendungszelle eine Mehrzahl von Sektoren aufweist, wobei jeder Sektor einen demselben zugeordneten Sender/Empfänger aufweist und wobei der Ressourcenzuteiler (120; 150) arbeitet, um Ressourcen unter den Sektoren zuzuteilen.

4. Die Vorrichtung (100, 130) gemäß einem der Ansprüche 1 bis 3, bei der der Empfänger (110; 140) arbeitet, um als die Belastungssituation eine Gesamtpufferfülleinformation (146), die von der Summe aller Pufferfüllen der Sender/Empfänger in einer Kommunikationszelle abhängt, und eine tatsächliche Pufferfülle (112; 142) eines bestimmten Senders/Empfängers zu empfangen; und
bei der der Ressourcenzuteiler (120; 150) arbeitet, um Ressourcen zu dem bestimmten Sender/Empfänger abhängig von einem Verhältnis (166) der tatsächlichen Pufferfülle (142) und der Gesamtpufferfülle (146) zuzuteilen.

5. Die Vorrichtung (100, 130) gemäß einem der Ansprüche 1 bis 4, bei der die Ressourcen (122; 170), die dem Sender/Empfänger zugeteilt sind, einen OFDM-Teilträger, wobei der OFDM-Teilträger ein Element eines Satzes (154) von OFDM-Teilträgern ist, die zum Gebrauch für eine Mehrzahl von Basisstationen, die der gleichen Kommunikationszelle dienen, verfügbar sind,
ein OFDM-Teilband, wobei das OFDM-Teilband eine Mehrzahl von OFDM-Teilträgern kombiniert, wobei das OFDM-Teilband ein Element eines Satzes (154) von OFDM-Teilbändern ist, die zum Gebrauch durch eine Mehrzahl von Basisstationen, die der gleichen Kommunikationszelle dienen, verfügbar sind,
einen OFDM-Schlitz, wobei der OFDM-Schlitz eine Mehrzahl von Teilträgern in einer Mehrzahl von nachfolgenden OFDM-Symbolen aufweist, wobei der OFDM-Schlitz ein Element eines Satzes von OFDM-Schlitzen ist, die zum Gebrauch durch eine Mehrzahl von Basisstationen, die der gleichen Kommunikationszelle dienen, verfügbar sind,
ein Frequenzintervall, wobei das Frequenzintervall ein Teil einer verfügbaren Gesamtfrequenzzuteilung (154) ist, die zum Gebrauch durch eine Mehrzahl von Basisstationen, die der gleichen Kommunikationszelle dienen, verfügbar ist,
einen Zeitschlitz aus einer Mehrzahl von verfügbaren Zeitschlitzen, der zum Gebrauch durch eine Mehrzahl von Basisstationen, die der gleichen Kommunikationszelle dienen, verfügbar ist; und/oder
eine räumliche Ressource aus einer Mehrzahl von räumlichen Ressourcen, die zum Gebrauch durch eine Basisstation verfügbar sind, die der Kommunikationszelle dient, wobei die räumliche Ressource einen Bereich definiert, in dem eine Basisstation einen Dienst konzentrieren kann, aufweisen.

6. Die Vorrichtung gemäß einem der Ansprüche 1 bis 5, die ferner eine Synchronisationseinheit zum Zeitsynchronisieren des Betriebs des Zwischensektorzeitplaners (100; 130) mit dem Betrieb zumindest eines anderen Zwischensektorzeitplaners aufweist.

7. Die Vorrichtung gemäß einem der Ansprüche 1 bis 6, bei der die Zuteilungsregel derart angepasst ist, dass die Ressourcen, die durch den Ressourcenzuteiler (120; 150) zugeteilt werden, nicht in einem Konflikt mit Ressourcen stehen, die durch einen anderen Zwischensektorzeitplaner zugeteilt werden.

8. Die Vorrichtung gemäß einem der Ansprüche 1 bis 7, bei der die Zuteilungsregel angepasst ist, um eine Störung zwischen benachbarten Basisstationen zu vermeiden, die der gleichen Kommunikationszelle dienen.

9. Die Vorrichtung gemäß einem der Ansprüche 1 bis 8, bei der der Ressourcenzuteiler (120; 150) arbeitet, um Ressourcen zu dem bestimmten Sender/Empfänger derart zuzuteilen, dass eine Datentransferkapazität der Ressourcen, die zu dem bestimmten Sender/Empfänger zugeteilt sind, mit Ausnahme von Abweichungen aufgrund von Ressourcenquantisierungseffekten proportional zu dem Verhältnis (166) der tatsächlichen Pufferfülle (142) des bestimmten Senders/Empfängers und der Gesamtpufferfülleinformation (146) ist.

10. Die Vorrichtung gemäß einem der Ansprüche 1 bis 9, bei der die Ressourcen in Ressourceneinheiten (154) quantisiert sind, bei der der Ressourcenzuteiler (150) arbeitet, um in einem ersten Zeitintervall eine Anzahl (168) von Ressourcen zur Zuteilung zu dem Sender/Empfänger unter Verwendung einer ersten Zuteilungsregel zu bestimmen, und um in einem zweiten Zeitintervall die Anzahl (168) von Ressourcen zur Zuteilung zu dem Sender/Empfänger unter Verwendung einer zweiten Zuteilungsregel zu bestimmen,
wobei die erste Zuteilungsregel und die zweite Zuteilungsregel derart angepasst sind, dass ein erster Rundungsfehler aufgrund einer Ressourcenquantisierung, der durch die erste Zuteilungsregel eingeführt wird, im Vergleich zu einem zweiten Rundungsfehler, der durch die zweite Zuteilungsregel eingeführt wird, ein entgegengesetztes Vorzeichen aufweist.

11. Die Vorrichtung gemäß Anspruch 10, bei der die erste Zuteilungsregel ein Runden des Produkts einer Gesamtanzahl (152) von verfügbaren Ressourceneinheiten und des Verhältnisses (166) der tatsächlichen Pufferfülle des Senders/Empfängers und der Gesamtpufferfülle (146) zu einem ganzzahligen Wert anzeigt, um die Anzahl (168) von Ressourceneinheiten zur Zuteilung zu dem Sender/Empfänger zu erhalten, und wobei die zweite Zuteilungsregel ein Erhalten der Anzahl (168) von Ressourceneinheiten zur Zuteilung zu dem Sender/Empfänger als einen Rest von Ressourceneinheiten (154) anzeigt, die nicht zu anderen Sendern/Empfängern zugeteilt sind, wobei der Rest als eine Differenz zwischen einer Gesamtanzahl (154) von verfügbaren Ressourceneinheiten (152) und zumindest einem gerundeten Wert, der eine Anzahl von Ressourceneinheiten beschreibt, die zu einem anderen Sender/Empfänger zugeteilt sind, berechnet ist.

12. Die Vorrichtung gemäß einem der Ansprüche 1 bis 11, bei der der Ressourcenzuteiler (120; 150) angepasst ist, um Ressourcen (122, 124; 170, 182) zu zumindest dem ersten Sender/Empfänger und dem zweiten Sender/Empfänger basierend auf den Informationen (112, 114; 142, 144, 146) über die Belastungssituation zuzuteilen, wobei der Zwischensektorzeitplaner (100; 130) ferner einen Ressourcenzuteilungsverteiler (184) zum Verteilen einer Information (170, 182) über die Ressourcenzuteilung an zumindest den ersten Sender/Empfänger und den zweiten Sender/Empfänger aufweist.

13. Die Vorrichtung gemäß einem der Ansprüche 1 bis 12, bei der die Ressourcen Zeitschlitze und/oder Frequenzschlitze sind und bei der der Ressourcenzuteiler (120; 150) angepasst ist, um für zumindest zwei Sender/Empfänger die Anzahl (168, 178) von Schlitzen zu bestimmen, die zu den Sendern/Empfängern zugeteilt werden sollen, und bei der der Ressourcenzuteiler (120; 150) ferner angepasst ist, um abwechselnd nachfolgende benachbarte Schlitze zu den zumindest zwei Sendern/Empfängern zuzuteilen, solange weniger Schlitze als die Anzahl (168; 178) von Schlitzen, die zugeteilt werden soll, zu zumindest einem von den zumindest zwei Sendern/Empfängern zugeteilt worden sind.

14. Die Vorrichtung gemäß einem der Ansprüche 1 bis 13, bei der die Ressourcen Zeitschlitze und/oder Frequenzschlitze sind und bei der der Ressourcenzuteiler (120; 150) angepasst ist, um nachfolgende benachbarte Schlitze zu den zumindest zwei Sendern/Empfängern unter Verwendung einer zyklischen Prozedur (Round-Robin-Prozedur) zuzuteilen.

15. Die Vorrichtung gemäß einem der Ansprüche 1 bis 12, bei der die Ressourcen Zeitschlitze und/oder Frequenzschlitze sind und bei der der Ressourcenzuteiler (120; 150) angepasst ist, um für die zumindest zwei Sender/Empfänger jeweilige Anzahlen (168, 178) von Schlitzen zu bestimmen, die zu den Sendern/Empfängern zugeteilt werden sollen, und bei der Ressourcenzuteiler (120; 150) ferner angepasst ist, um zu dem ersten Sender/Empfänger einen ersten zusammenhängenden Block von benachbarten Schlitzen zuzuteilen und zu dem zweiten Sender/Empfänger einen zweiten zusammenhängenden Block von benachbarten Schlitzen zuzuteilen.

16. Die Vorrichtung gemäß einem der Ansprüche 1 bis 15, bei der der Ressourcenzuteiler (120; 150) ferner angepasst ist, um die Ressourcen, die zu den Sendern/Empfängern zugeteilt werden, an eine Mehrzahl von Datenverbindungen mit den Mobilkommunikationsgeräten zu verteilen, die durch den Sender/Empfänger aufrechterhalten werden.

17. Die Vorrichtung gemäß einem der Ansprüche 1 bis 16, bei der der Zeitplaner ein Zwischensektorzeitplaner ist.

18. Sender/Empfänger (200) für ein Mobilkommunikationsnetzwerk, das einen ersten Sender/Empfänger und einen zweiten Sender/Empfänger aufweist, die angepasst sind, um unter Verwendung von verfügbaren Gesamtsende-/Empfangsressourcen zu senden oder zu empfangen, der Sender/Empfänger mit
einem Sendepuffer (210) zum Puffern von Daten (212), die von der Basisstation (200) zu einem Mobilkommunikationsgerät oder umgekehrt gesendet werden sollen;

einem Sendepufferfüllebestimmer (220) zum Bestimmen einer Information über eine Belastungssituation des Senders/Empfängers (200) einschließlich einer Information (222) über eine tatsächliche Fülle des Sendepuffers (210); einem Zeitplaner, der einen Empfänger (228) zum Empfangen einer Belastungssituation zumindest eines anderen Senders/Empfängers, wobei die Belastungssituation Informationen (226) über eine tatsächliche Pufferfülle eines Sendepuffers des zumindest einen anderen Senders/Empfängers umfasst, und einen Ressourcenzuteiler (224) zum Zuteilen eines ersten Abschnitts der Gesamtressourcen zu dem Sender/Empfänger (200) basierend auf den Informationen (222) über die Belastungssituation des ersten Senders/Empfängers und den Informationen (226) über die Belastungssituation des zumindest einen anderen Senders/Empfängers umfasst, wobei sich der erste Abschnitt von einem zweiten Abschnitt der Gesamtressourcen unterscheidet, der zu dem zweiten Sender/Empfänger zugeteilt ist, wobei der Ressourcenzuteiler (224) angepasst ist, um eine Zuteilungsregel anzuwenden, wobei die Zuteilungsregel darin resultiert, dass mehr Ressourcen zu einem Sender/Empfänger zugeteilt werden, der eine höhere Belastung aufweist, als zu einem Sender/Empfänger, der eine niedrigere Belastung aufweist;
wobei der erste Sender/Empfänger Verknüpfungen mit einer Mehrzahl von Geräten einrichten und aufrechterhalten kann,
wobei der zweite Sender/Empfänger Verknüpfungen mit einer Mehrzahl von Geräten einrichten und aufrechterhalten kann,
wobei die Pufferfülle des ersten Senders/Empfängers über eine Mehrzahl von Sendungsverknüpfungen berechnet ist, die durch den ersten Sender/Empfänger aufrechterhalten werden, und
wobei die Pufferfülle des zweiten Senders/Empfängers über eine Mehrzahl von Sendungsverknüpfungen berechnet ist, die durch den zweiten Sender/Empfänger aufrechterhalten werden.

19. Die Vorrichtung gemäß Anspruch 18, bei der der Sender/Empfänger (200) ferner einen Sendeapparat (250) zum Transferieren von Daten (254), die an ein spezifisches Mobilkommunikationsgerät gesendet werden sollen und in dem Sendepuffer (210) enthalten sind, an eine andere Basisstation auf ein Erfassen hin, dass das spezifische Mobilkommunikationsgerät durch die andere Basisstation bedient wird, und eine Puffersteuerung (260) zum Löschen der Daten (254) aus dem Sendepuffer (210), die an die andere Basisstation transferiert werden, aufweist.

20. Die Vorrichtung gemäß Anspruch 19, bei der die Puffersteuerung (260) angepasst ist, um eine Bestimmung der Informationen (222) über die Belastungssituation des Senders/Empfängers (200) nach dem Löschen der Daten (254) aus dem Sendepuffer (210), die an die andere Basisstation transferiert werden, zu initiieren.

21. Die Vorrichtung gemäß einem der Ansprüche 18 bis 20, bei der der Sender/Empfänger (200) ferner einen Empfänger (240) zum Empfangen von Daten, die von einem anderen Sender/Empfänger an ein besonderes Mobilkommunikationsgerät gesendet werden sollen, und eine Puffersteuerung (260) zum Hinzufügen der Daten (244) zu dem Sendepuffer (210), die zu dem besonderen Mobilgerät gesendet werden sollen, aufweist.

22. Die Vorrichtung gemäß Anspruch 21, bei der die Puffersteuerung (260) angepasst ist, um eine Bestimmung der Informationen (222) über die Belastungssituation der Basisstation (200) nach einem Hinzufügen der Daten (244), die von der anderen Basisstation empfangen werden, zu dem Sendepuffer (210) zu initiieren.

23. Die Vorrichtung gemäß einem der Ansprüche 18 bis 22, bei der der Zeitplaner ein Zwischensektorzeitplaner ist.

24. Ein Verfahren zum Steuern eines Senders/Empfängers unter einem ersten Sender/Empfänger und einem zweiten Sender/Empfänger, wobei der erste Sender/Empfänger und der zweite Sender/Empfänger angepasst werden, um unter Verwendung von verfügbaren Gesamtsende-/Empfangsressourcen zu senden oder zu empfangen, wobei der erste Sender/Empfänger erste Sendungsressourcen verwendet und der zweite Sender/Empfänger zweite Sendungsressourcen verwendet, wobei der erste Sender/Empfänger einen ersten Sendepuffer aufweist und der zweite Sender/Empfänger einen zweiten Sendepuffer aufweist, wobei das Verfahren folgende Schritte aufweist:

Empfangen (110; 140) von Informationen (112, 114; 142, 144, 146) über eine Belastungssituation des ersten Senders/Empfängers und des zweiten Senders/Empfängers, wobei die Belastungssituation Informationen über eine tatsächliche Pufferfülle des ersten Puffers und des zweiten Puffers zu einer bestimmten Zeit umfasst; Zuteilen (120; 150) eines ersten Abschnitts der Gesamtressourcen zu dem ersten Sender/Empfänger basierend auf den Informationen (112, 114; 142, 144, 146) über die Belastungssituation durch ein Anwenden einer Zuteilungsregel, wobei sich der erste Abschnitt von einem zweiten Abschnitt der Gesamtressourcen unterscheidet, der zu dem zweiten Sender/Empfänger zugeteilt wird, wobei die Zuteilungsregel darin resultiert, dass im Vergleich zu einem Sender/Empfänger, der eine niedrigere Belastung aufweist, mehr Ressourcen zu einem Sender/Empfänger zugeteilt werden, der eine höhere Belastung aufweist,

wobei der erste Sender/Empfänger Verknüpfungen mit einer Mehrzahl von Geräten einrichten und aufrechterhalten kann,
wobei der zweite Sender/Empfänger Verknüpfungen mit einer Mehrzahl von Geräten einrichten und aufrechterhalten kann,
wobei die Pufferfülle des ersten Senders/Empfängers über eine Mehrzahl von Sendungsverknüpfungen berechnet wird, die durch den ersten Sender/Empfänger aufrechterhalten werden, und
wobei die Pufferfülle des zweiten Senders/Empfängers über eine Mehrzahl von Sendungsverknüpfungen berechnet wird, die durch den zweiten Sender/Empfänger aufrechterhalten werden.

25. Ein Verfahren zum Betreiben eines Senders/Empfängers für ein Mobilkommunikationsnetzwerk, das einen ersten Sender/Empfänger und einen zweiten zumindest einen anderen Sender/Empfänger aufweist, die angepasst sind, um unter Verwendung von verfügbaren Gesamtsende-/Empfangsressourcen zu senden oder zu empfangen, wobei das Verfahren folgende Schritte aufweist:

Puffern (210) von Daten, die von der Basisstation zu einem Mobilkommunikationsgerät gesendet werden sollen oder umgekehrt;
Bestimmen (220) einer Information über eine Belastungssituation einschließlich von Informationen (222) über eine tatsächliche Fülle eines Sendepuffers;
Empfangen (228) einer Information über eine Belastungssituation zumindest eines anderen Senders/Empfängers, wobei die Belastungssituation Informationen (226) über eine tatsächliche Pufferfülle eines Sendepuffers des zumindest einen anderen Senders/Empfängers umfasst;
Zuteilen (224) eines ersten Abschnitts der Gesamtressourcen zu dem ersten Sender/Empfänger basierend auf den Informationen (222) über die Belastungssituation des ersten Senders/Empfängers und über die Belastungssituation (226) des zumindest einen anderen Senders/Empfängers durch ein Anwenden einer Zuteilungsregel, wobei sich der erste Abschnitt von einem zweiten Abschnitt der Gesamtressourcen unterscheidet, der zu dem zweiten Sender/Empfänger zugeteilt wird, wobei die Zuteilungsregel darin resultiert, dass im Vergleich zu einem Sender/Empfänger, der eine niedrigere Belastung aufweist, mehr Ressourcen zu einem Sender/Empfänger zugeteilt werden, der eine höhere Belastung aufweist,

wobei der erste Sender/Empfänger Verknüpfungen mit einer Mehrzahl von Geräten einrichten und aufrechterhalten kann,
wobei der zumindest eine andere Sender/Empfänger Verknüpfungen mit einer Mehrzahl von Geräten einrichten und aufrechterhalten kann,
wobei die Pufferfülle des ersten Senders/Empfängers über eine Mehrzahl von Sendungsverknüpfungen berechnet wird, die durch den ersten Sender/Empfänger aufrechterhalten werden, und
wobei die Pufferfülle des zumindest einen anderen Senders/Empfängers über eine Mehrzahl von Sendungsverknüpfungen berechnet wird, die durch den zweiten Sender/Empfänger aufrechterhalten werden.

26. Ein Computerprogramm mit einem Programmcode zum Durchführen des Verfahrens gemäß den Ansprüchen 24 oder 25, wenn das Computerprogramm auf einem Computer abläuft.

**Revendications**

1. Programmateur (100 ; 130) pour contrôler un transmetteur / récepteur parmi au moins un premier transmetteur / récepteur et un deuxième transmetteur / récepteur, le premier transmetteur / récepteur et le deuxième transmetteur / récepteur étant adaptés pour transmettre ou recevoir à l'aide des ressources de transmission / réception totales disponibles, le premier transmetteur / récepteur utilisant des premières ressources de transmission et le deuxième transmetteur / récepteur utilisant des deuxièmes ressources de transmission, le premier transmetteur / récepteur présentant un premier tampon de transmission et le deuxième transmetteur / récepteur présentant un deuxième tampon de transmission, le programmateur comprenant :

un récepteur (110 ; 140) destiné à recevoir des informations (112, 114 ; 142, 144) sur une situation de charge du premier transmetteur / récepteur et du deuxième transmetteur / récepteur, la situation de charge comprenant des informations sur un état de remplissage réel du premier et du deuxième tampon à un moment donné ;
un allocateur de ressources (120 ; 150) destiné à allouer une première partie des ressources totales au premier transmetteur / récepteur, la première partie étant différente d'une deuxième partie allouée au deuxième transmetteur / récepteur, sur base des informations (112, 114 ; 142, 144) sur la situation de charge, l'allocateur de ressources (120 ; 150) étant adapté pour appliquer une règle d'allocation (160, 162, 164), la règle d'allocation (160, 162, 164) ayant pour résultat que plus de ressources (170) sont allouées à un transmetteur / récepteur ayant une charge plus élevée, comparé au transmetteur / récepteur ayant une charge inférieure,

dans lequel le premier ou le deuxième transmetteur / récepteur est une station de base ou un dispositif mobile;

dans lequel le premier transmetteur / récepteur est à même d'établir et de maintenir des liaisons avec une pluralité de dispositifs,

dans lequel le deuxième transmetteur / récepteur est même d'établir et de maintenir des liaisons avec une pluralité de dispositifs,

dans lequel l'état de remplissage de tampon du premier transmetteur / récepteur est calculé sur une pluralité de liaisons de transmission maintenues par le premier transmetteur / récepteur, et

dans lequel l'état de remplissage de tampon du deuxième transmetteur / récepteur est calculé sur une pluralité de liaisons de transmission maintenues par le deuxième transmetteur / récepteur.

2. Appareil selon la revendication 1, dans lequel le premier transmetteur / récepteur et le deuxième transmetteur / récepteur sont disposés de sorte qu'ils transmettent dans ou reçoivent de la même région spatiale.

3. Appareil selon les revendications 1 ou 2, dans lequel le premier transmetteur / récepteur et le deuxième transmetteur / récepteur sont disposés dans la même cellule de transmission, dans lequel la cellule de transmission comprend une pluralité de secteurs, dans lequel chaque secteur présente, y associé, un transmetteur / récepteur, et dans lequel l'allocateur de ressources (120 ; 150) est opérationnel pour allouer des ressources parmi les secteurs.

4. Appareil (100, 130) selon l'une des revendications 1 à 3, dans lequel le récepteur (110; 140) est opérationnel pour recevoir, comme situation de charge, une information d'état de remplissage de tampon total (146) en fonction de la somme de tous les états de remplissage de tampon des transmetteurs / récepteurs dans une cellule de communication, et un état de remplissage de tampon réel (112 ; 142) d'un transmetteur / récepteur donné; et

dans lequel l'allocateur de ressources (120 ; 150) est opérationnel pour allouer des ressources au transmetteur / récepteur donné en fonction d'un rapport (166) entre l'état de remplissage de tampon réel (142) et l'état de remplissage de tampon total (146).

5. Appareil (100, 130) selon l'une des revendications 1 à 4, dans lequel les ressources (122 ; 170) allouées au transmetteur / récepteur comprennent une sous-porteuse OFDM, la sous-porteuse OFDM étant un élément d'un ensemble (154) de sous-porteuses OFDM disponibles pour être utilisées pour une pluralité de stations de base desservant la même cellule de communication,

une sous-bande OFDM, la sous-bande OFDM combinant une pluralité de sous-porteuses OFDM, la sous-bande OFDM étant un élément d'un ensemble (154) de sous-bandes OFDM disponibles pour être utilisées par une pluralité de stations de base desservant la même cellule de communication,

une fenêtre OFDM, la fenêtre OFDM comprenant une pluralité de sous-porteuses dans une pluralité de symboles OFDM successifs, la fenêtre OFDM étant un élément d'un ensemble de fenêtres OFDM disponibles pour être utilisées par une pluralité de stations de base desservant la même cellule de communication,

un intervalle de fréquence, l'intervalle de fréquence faisant partie d'une allocation de fréquences totales (154) disponibles pour être utilisées par une pluralité de stations de base desservant la même cellule de communication,

une fenêtre de temps parmi une pluralité de fenêtres de temps disponibles pour être utilisées par une pluralité de stations de base desservant la même cellule de communication ; et/ou

une ressource spatiale, la ressource spatiale définissant une région sur laquelle une station de base peut concentrer le service, parmi une pluralité de ressources spatiales disponibles pour être utilisées par une station de base desservant la cellule de communication.

6. Appareil selon l'une des revendications 1 à 5, comprenant par ailleurs une unité de synchronisation destinée à synchroniser dans le temps le fonctionnement du programmateur intersectoriel (100; 130) avec le fonctionnement d'au moins un autre programmateur intersectoriel.

7. Appareil selon l'une de revendications 1 à 6, dans lequel la règle d'allocation est adaptée de sorte que les ressources allouées par l'allocateur de ressources (120; 150) ne soient pas en conflit avec les ressources allouées par un autre programmateur intersectoriel.

8. Appareil selon l'une des revendications 1 à 7, dans lequel la règle d'allocation est adaptée de manière à éviter une interférence entre des stations de base adjacentes desservant la même cellule de communication.

9. Appareil selon l'une des revendications 1 à 8, dans lequel l'allocateur de ressources (120 ; 150) est opérationnel pour allouer des ressources au transmetteur / récepteur donné de sorte qu'une capacité de transfert de données des ressources allouées au transmetteur / récepteur donné soit, sauf des écarts dus aux effets de quantification de ressources, proportionnelle au rapport (166) entre l'état de remplissage de tampon réel (142) du transmetteur / récepteur donné et les informations d'état de remplissage de tampon total (146).

10. Appareil selon l'une des revendications 1 à 9, dans lequel les ressources sont quantifiées en unités de ressource (154), dans lequel l'allocateur de ressources (150) est opérationnel pour déterminer, dans un premier intervalle de temps, un nombre (168) de ressources à allouer au transmetteur / récepteur à l'aide d'une première règle d'allocation, et pour déterminer, dans un deuxième intervalle de temps, le nombre (168) de ressources à allouer au transmetteur / récepteur à l'aide d'une deuxième règle d'allocation,
la première règle d'allocation et la deuxième règle d'allocation étant adaptées de sorte qu'une première erreur d'arrondi due à la quantification de ressources introduite par la première règle d'allocation ait un signe opposé lorsque comparée à une deuxième erreur d'arrondi introduite par la deuxième règle d'allocation.

11. Appareil selon la revendication 10, dans lequel la première règle d'allocation indique l'arrondi à une valeur de nombre entier du produit d'un nombre total (152) d'unités de ressource disponibles et du rapport (166) entre l'état de remplissage de tampon réel du transmetteur / récepteur et l'état de remplissage de tampon total (146), pour obtenir le nombre (168) d'unités de ressource à allouer au transmetteur / récepteur, et dans lequel la deuxième règle d'allocation indique l'obtention du nombre (168) d'unités de ressource à allouer au transmetteur / récepteur comme reste des unités de ressource (154) non allouées à d'autres transmetteurs / récepteurs, le reste étant calculé comme différence entre un nombre total (154) d'unités de ressource disponibles (152) et au moins une valeur arrondie décrivant un nombre d'unités de ressource allouées à un autre transmetteur / récepteur.

12. Appareil selon l'une de revendications 1 à 11, dans lequel l'allocateur de ressources (120 ; 150) est adapté de manière à allouer des ressources (122, 124 ; 170, 182) à au moins le premier transmetteur / récepteur et le deuxième transmetteur / récepteur sur base des informations (112, 114 ; 142, 144, 146) sur la situation de charge, dans lequel le programmateur intersectoriel (100 ; 130) comprend par ailleurs un distributeur d'allocations de ressource (184) destiné à distribuer une information (170, 182) sur l'allocation de ressources à au moins le premier transmetteur / récepteur et le deuxième transmetteur / récepteur.

13. Appareil selon l'une des revendications 1 à 12, dans lequel les ressources sont des fenêtres de temps et/ou des fenêtres de fréquence, et dans lequel l'allocateur de ressources {120 ; 150) est adapté de manière à déterminer, pour au moins deux transmetteurs / récepteurs, le nombre (168, 178) de fenêtres à allouer aux transmetteurs / récepteurs, et dans lequel l'allocateur de ressources (120; 150) est par ailleurs adapté de manière à allouer alternativement des fenêtres adjacentes suivantes aux au moins deux transmetteurs / récepteurs pour autant que moins de fenêtres que le nombre (168 ; 178) de fenêtres à allouer aient été allouées à au moins l'un parmi les au moins deux transmetteur / récepteurs.

14. Appareil selon l'une des revendications 1 à 13, dans lequel les ressources sont des fenêtres de temps et/ou des fenêtres de fréquence, et dans lequel l'allocateur de ressources (120; 150) est adapté de manière à allouer des fenêtres adjacentes suivantes aux au moins deux transmetteurs / récepteurs à l'aide d'un procédure de Round Robin.

15. Appareil selon l'une des revendications 1 à 12, dans lequel les ressources sont des fenêtres de temps et/ou des fenêtres de fréquence, et dans lequel l'allocateur de ressources (120 ; 150) est adapté de manière à déterminer, pour les au moins deux transmetteurs / récepteurs, les nombres respectifs (168, 178) de fenêtres à allouer aux transmetteurs / récepteurs, et dans lequel l'allocateur de ressources (120 ; 150) est par ailleurs adapté de manière à allouer au premier transmetteur / récepteur un premier bloc contigu de fenêtres adjacentes, et à allouer au deuxième transmetteur / récepteur un deuxième bloc contigu de fenêtres adjacentes.

16. Appareil selon l'une des revendications 1 à 15, dans lequel l'allocateur de ressources (120 ; 150) est par ailleurs adapté pour distribuer les ressources allouées aux transmetteurs / récepteurs à une pluralité de connexions de données avec les dispositifs de communication mobile maintenus par le transmetteur / récepteur.

17. Appareil selon l'une des revendications 1 à 16, dans lequel le programmateur est un programmateur intersectoriel.

18. Transmetteur / récepteur (200) pour un réseau de communication mobile présentant un premier transmetteur / récepteur et un deuxième transmetteur / récepteur adaptés de manière à transmettre ou recevoir à l'aide des ressources de transmission/réception totales disponibles, le transmetteur / récepteur comprenant,

un tampon de transmission (210) des données de tamponnage (212) à transmettre de la station de base (200) à un dispositif de communication mobile, ou inversement;

un déterminateur d'état de remplissage de tampon de transmission (220) destiné à déterminer une information sur une situation de charge du transmetteur / récepteur (200) comportant une information (222) sur un état de remplissage réel du tampon de transmission (210);

un programmateur comportant un récepteur (228) destiné à recevoir une situation de charge d'au moins un autre transmetteur / récepteur, la situation de charge comportant des informations (226) sur un état de remplissage réel d'un tampon de transmission de l'au moins un autre transmetteur / récepteur, et un allocateur de ressources (224) destiné à allouer une première partie des ressources totales au premier transmetteur / récepteur (200), la première partie étant différente d'une deuxième partie des ressources totale allouées au deuxième transmetteur / récepteur, sur base des informations (222) sur la situation de charge du premier transmetteur / récepteur et des informations (226) sur la situation de charge de l'au moins un autre transmetteur / récepteur, l'allocateur de ressources (224) étant adapté de manière à appliquer une règle d'allocation, la règle d'allocation ayant pour résultat que plus de ressources sont allouées à un transmetteur / récepteur ayant une charge plus élevée qu'à un transmetteur / récepteur ayant une charge inférieure;

dans lequel le premier transmetteur / récepteur est à même d'établir et de maintenir des liaisons avec une pluralité de dispositifs,

dans lequel le deuxième transmetteur / récepteur est à même d'établir et de maintenir des liaisons avec une pluralité de dispositifs,

dans lequel l'état de remplissage de tampon du premier transmetteur / récepteur est calculé sur une pluralité de liaisons de transmission maintenues par le premier transmetteur / récepteur, et dans lequel l'état de remplissage de tampon du deuxième transmetteur / récepteur est calculé sur une pluralité de liaisons de transmission maintenues par le deuxième transmetteur / récepteur.

19. Appareil selon la revendication 18, dans lequel le transmetteur / récepteur (200) comprend par ailleurs un émetteur (250) destiné à transférer à une autre station de base les données (254) à transmettre à un dispositif de communication mobile spécifique et contenues dans le tampon de transmission (210) à la détection du fait que le dispositif de communication mobile spécifique est desservi par l'autre station de base, et d'un contrôleur de tampon (260) destiné à effacer du tampon de transmission (210) les données (254) transférées à l'autre station de base.

20. Appareil selon la revendication 19, dans lequel le contrôleur de tampon (260) est adapté de manière à initier une détermination des informations (222) sur la situation de charge du transmetteur / récepteur (200) après avoir effacé du tampon de transmission (210) les données (254) transférées à l'autre station de base.

21. Appareil selon l'une des revendications 18 à 20, dans lequel le transmetteur / récepteur (200) comprend par ailleurs un récepteur (240) destiné à recevoir les données à transmettre à un dispositif de communication mobile particulier d'un autre transmetteur / récepteur, et un contrôleur de tampon (260) destiné à ajouter au tampon de transmission (210) les données (244) à transmettre au dispositif mobile particulier.

22. Appareil selon la revendication 21, dans lequel le contrôleur de tampon (260) est adapté de manière à initier une détermination des informations (222) sur la situation de charge de la station de base (200) après avoir ajouté au tampon de transmission (210) les données (244) reçues de l'autre station de base.

23. Appareil selon l'une des revendications 18 à 22, dans lequel le programmateur est un programmateur intersectoriel.

24. Procédé pour contrôler un transmetteur / récepteur parmi un premier transmetteur / récepteur et un deuxième transmetteur / récepteur, le premier transmetteur / récepteur et le deuxième transmetteur / récepteur étant adaptés de manière à transmettre ou recevoir à l'aide des ressources de transmission / réception totales disponibles, le premier transmetteur / récepteur utilisant les premières ressources de transmission et le deuxième transmetteur / récepteur utilisant les deuxièmes ressources de transmission, le premier transmetteur / récepteur présentant un premier tampon de transmission et le deuxième transmetteur / récepteur présentant un deuxième tampon de transmission, le procédé comprenant:

recevoir (110 ; 140) des informations (112, 114 ; 142, 144, 146) sur une situation de charge du premier transmetteur / récepteur et du deuxième transmetteur / récepteur, la situation de charge comportant des informations sur l'état de remplissage réel du premier tampon et du deuxième tampon à un moment donné;

allouer (120 ; 150) une première partie des ressources totales au premier transmetteur / récepteur, la première partie étant différente d'une deuxième partie des ressources totale allouées au deuxième transmetteur / récepteur, sur base des informations (112, 114 ; 142, 144, 146) sur la situation de charge en appliquant une règle d'allocation, la règle d'allocation ayant pour résultat que plus de ressources sont allouées à un transmetteur / récepteur ayant une charge plus élevée, comparé à un transmetteur / récepteur ayant une charge inférieure,
dans lequel le premier transmetteur / récepteur est à même d'établir et de maintenir des liaisons avec une pluralité de dispositifs,
dans lequel le deuxième transmetteur / récepteur est à même d'établir et de maintenir des liaisons avec une pluralité de dispositifs,
dans lequel l'état de remplissage de tampon du premier transmetteur / récepteur est calculé sur une pluralité de liaisons de transmission maintenues par le premier transmetteur / récepteur, et
dans lequel l'état de remplissage de tampon du deuxième transmetteur / récepteur est calculé sur une pluralité de liaisons de transmission maintenues par le deuxième transmetteur / récepteur.

25. Procédé pour faire fonctionner un transmetteur / récepteur pour un réseau de communication mobile présentant un premier transmetteur / récepteur et au moins un autre transmetteur / récepteur adapté de manière à transmettre ou recevoir à l'aide des ressources de transmission / réception totales disponibles, le procédé comprenant:

    tamponner (210) les données à transmettre de la station de base à un dispositif de communication mobile, ou inversement;
    déterminer (220) une information sur une situation de charge comportant des informations (222) sur un état de remplissage réel d'un tampon de transmission;
    recevoir (228) une information sur une situation de charge d'au moins un autre transmetteur / récepteur, la situation de charge comportant des informations (226) sur un état de remplissage réel d'un tampon de transmission de l'au moins un autre transmetteur / récepteur;
    allouer (224) une première partie des ressources totales au premier transmetteur / récepteur, la première partie étant différente d'une deuxième partie des ressources totales allouées au deuxième transmetteur / récepteur, sur base des informations (222) sur la situation de charge du premier transmetteur / récepteur et sur la situation de charge (226) de l'au moins un autre transmetteur / récepteur en appliquant une règle d'allocation, la règle d'allocation ayant pour résultat que plus de ressources sont allouées à un transmetteur / récepteur ayant une charge plus élevée, comparé à un transmetteur / récepteur ayant une charge inférieure,

    dans lequel le premier transmetteur / récepteur est à même d'établir et de maintenir des liaisons avec une pluralité de dispositifs,
    dans lequel l'au moins un autre transmetteur / récepteur est à même d'établir et de maintenir des liaisons avec une pluralité de dispositifs,
    dans lequel l'état de remplissage de tampon du premier transmetteur / récepteur est calculé sur une pluralité de liaisons de transmission maintenues par le premier transmetteur / récepteur, et
    dans lequel l'état de remplissage de tampon de l'au moins un autre transmetteur / récepteur est calculé sur une pluralité de liaisons de transmission maintenues par le deuxième transmetteur / récepteur.

26. Programme d'ordinateur ayant un code de programme pour réaliser le procédé selon les revendications 24 ou 25 lorsque le programme d'ordinateur est exécuté sur un ordinateur.

(a) Scenario I, poisson data traffic

Fig. 12 a

(b) Scenario II, burst data traffic

Fig. 12b

EP 1 760 954 B1

(a) Scenario I, poisson data traffic

Fig. 11 a

(b) Scenario II, burst data traffic

Fig. 11b

EP 1 760 954 B1

(a) Scenario I, poisson data traffic

Fig. 10 a

(b) Scenario II, burst data traffic

Fig. 10b

EP 1 760 954 B1

(b) Scenario II, burst data traffic

Fig.9b

(a) Scenario I, Poisson data traffic

Fig.9a

region A ⟶

region B ⟶
region C ⟶
region D ⟶

Fig. 8

Fig. 7

Fig. 6

Fig. 5

EP 1 760 954 B1

Fig. 4

Fig. 3b

channel quality feedback

scheduling
adapt. mod.
ARQ

OFDM

connvolutinally encoded
link packets

buffer status

Fig. 3a

**280**

| |
|---|
| Mobile Communication Device locates base station BS2 |

**282**

| |
|---|
| Mobile Communication Device connects to the located base station BS2 |

**284**

| |
|---|
| Located base station BS2 obtains data for the Mobile Communication Device |

**286**

| |
|---|
| Buffer fullness of base station BS2 increases |

**288**

| |
|---|
| Base station BS2 reports buffer fullness to base stations BS1, BS3<br>Base station BS1, BS3, report buffer fullness to base station BS2 |

**290**

| |
|---|
| Base stations BS1, BS2, BS3 determine resource allocation based on buffer fullnesses |

**292**

| |
|---|
| Base stations BS1, BS2, BS3 transmit data to mobile devices using resource allocation |

**294**

Fig. 2b

Fig. 2a

Fig. 1b

112    114

Information on          Information on
load situation    100    load situation

from 1st                                from 2nd
base station                            base station

actual buffer          actual buffer
fullness               fullness

receiver                    110

resource
allocator              120
allocation rule

122                         124

to 1st                                  to 2nd
base station    allocated    optional    base station
                resources

Fig. 1a

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6751193 B1
- EP 1282324 A1
- US 20040072571 A1
- US 20030017831 A1
- US 6333936 B1

### Non-patent literature cited in the description

- **A. GHASEMI ; E. S. SOUSA.** Distributed Intercell Coordination through Time Reuse Partitioning in Downlink CDMA. *Proc. Wireless Commun. & Networking Conf. (WCNC'04), Atlanta, USA,* May 2004, 1992-1997
- **M. STERNAD ; D. ARONSSON.** Channel Estimation and Prediction for Adaptive OFDM Downlinks. *Proc. IEEE Vehic. Technol. Conf. 2003-Fall (VTC'F03), Orlando, USA,* October 2003, 1283-1287
- **M. STERNAD ; T. OTTOSSON ; A. AHLEN ; A. SVENSSON.** Attaining both Coverage and High Spectral Efficiency with Adaptive OFDM Downlinks. *Proc. IEEE Vehic. Technol. Conf. 2003-Fall (VTC'F03), Orlando, USA,* October 2003, 2486-2490
- **J. CHUANG.** An OFDM-based System with Dynamic Packet Assignment and Interference Suppression for Advanced Cellular Internet Services. *Proc. IEEE Global Telecommun. Conf. (Globecom'98), Sydney, Australia,* November 1998, 974-979
- **M. H. AHMED ; H. YANIKOMEROGLU ; S. MAHMOUD ; D. FALCONER.** Scheduling of Multimedia Traffic in Interference-limited Broadband Wireless Access Networks. *Proc. Int. Symp. Wireless Pers. Multimedia Commun. (WPMC'02), Hawaii, USA,* October 2002, 1108-1112
- **J. GROSS ; J. KLAUE ; H. KARL ; A. WOLISZ.** Subcarrier Allocation for Variable Bit Rate Video Streams in Wireless OFDM Systems. *Proc. IEEE Vehic. Technol. Conf. 2003-Fall (VTC'F03), Orlando, USA,* October 2003, 2481-2485
- **D. HACCOUN ; G. BEGIN.** High-rate punctured convolutional codes for Viterbi and sequential decoding. *IEEE Trans. Commun.,* vol. 37, 1113-1125
- **W. WANG ; T. OTTOSSON ; M. STERNAD ; A. AHLEN ; A. SVENSSON.** Impact of multiuser diversity and channel variability on adaptive OFDM. *Proc. IEEE Vehic. Technol. Conf. 2003-Fall (VTC'F03), Orlando, USA,* October 2003, 547-551
- **A. LEON-GARCIA ; I. WIDJAJA.** Communication Networks. New York, NY, USA. McGraw-Hill, 2000
- **A. S. TANNENBAUM.** Computer Networks. Englewood Cliffs. Prentice Hall, 1996
- Scheduling of Real/Non-real Time Services: Adaptive EXP/PF Algorithm. **J. H. RHEE ; J. M. HOLTZMAN ; D. K. KIM.** Proc. IEEE Vehic. Technol. Conf. 2003-Spring (VTC'S03). April 2003, 462, 466